# EUROPÄISCHE PATENTSCHRIFT

(11) **EP 3 339 940 B1**
(45) Veröffentlichungstag und Bekanntmachung des Hinweises auf die Patenterteilung: **04.11.2020**
(21) Anmeldenummer: 16206331.7
(22) Anmeldetag: 22.12.2016
(51) Int. Cl.: G02C 7/02, C08J 7/04, B44C 1/00, B29D 11/00, B44F 1/06, B41M 3/00

(54) **VERFAHREN ZUR ERZEUGUNG EINER BESCHICHTUNG AUF EINEM BRILLENGLAS UND BRILLENGLAS**
METHOD OF PRODUCING A COATING ON A SPECTACLE LENS AND SPECTACLE LENS
PROCÉDÉ DE PRODUCTION D'UN REVÊTEMENT SUR UN VERRE DE LUNETTE ET VERRE DE LUNETTE

(43) Veröffentlichungstag der Anmeldung: 27.06.2018
(73) Patentinhaber: Carl Zeiss Vision International GmbH, 73430 Aalen (DE)
(72) Erfinder: Gromotka, Jeremias, 73433 Aalen (DE)
(74) Vertreter: Witte, Weller & Partner Patentanwälte mbB

(56) Entgegenhaltungen:
- US-A- 4 673 609
- US-A1- 2009 081 378
- US-A1- 2013 308 217
- US-A1- 2014 016 083
- US-A1- 2014 099 439
- US-A1- 2014 300 856
- US-A1- 2015 277 143

## Beschreibung

Die vorliegende Erfindung ist in den Ansprüchen definiert und betrifft ein Verfahren zur Erzeugung einer Beschichtung auf wenigstens einer Oberfläche eines beschichteten oder unbeschichteten Brillenglases, mit den Schritten: Aufbringen wenigstens einer Maskierung auf wenigstens einen Teilbereich wenigstens einer Oberfläche des beschichteten oder unbeschichteten Brillenglases, Aufbringen zumindest einer Schicht auf diese wenigstens eine Oberfläche und auf diese wenigstens eine Maskierung, und Entfernen der wenigstens einen Maskierung und der auf der wenigstens einen Maskierung aufgebrachten zumindest einen Schicht von dem wenigstens einen Teilbereich der wenigstens einen Oberfläche. Die Erfindung betrifft ferner das durch das Verfahren hergestellte Brillenglas, sowie ein Brillenglas, wobei das Brillenglas beschichtet oder unbeschichtet ist, mit wenigstens einer Maskierung wenigstens eines Teilbereichs wenigstens einer Oberfläche des beschichteten oder unbeschichteten Brillenglases.

Verfahren zur Erzeugung von Beschichtungen auf Brillengläser sind im Stand der Technik bekannt. Beispiele derartiger Beschichtungen umfassen beispielsweise Entspiegelungsschichten bzw. Antireflexschichten. Brillengläser werden mit sogenannten Entspiegelungsschichten versehen, um störende Spiegelungen zu vermeiden. Hierbei handelt es sich für gewöhnlich um eine Schichtfolge, in der alternierend Schichten mit einem ersten Brechungsindex und Schichten mit einem zweiten, gegenüber dem ersten Brechungsindex verschiedenen, vorzugsweise höheren Brechungsindex aufgetragen sind. Derartige Entspiegelungsschichten sollten neben guten Entspiegelungseigenschaften eine möglichst geringe Anfälligkeit gegenüber mechanischen Belastungen aufweisen. Derartige Entspiegelungsschichten sind beispielsweise aus der EP 2 437 084 A1 bekannt. Weitere Beschichtungen werden beispielsweise in der DE 10 2013 208 310 A1, EP 3 067 720 A1, EP 2 437 085 A1, WO 2016/142496 A1, WO 2010/084272 A1 und der WO 2008/080020 A1 offenbart.

Entspiegelungsschichten werden eingesetzt, um die Reflexion von optischen Oberflächen eines Brillenglases zu unterdrücken und die Lichttransmission zu erhöhen. Die Reflexminderung beruht hierbei auf dem Prinzip der Interferenz an dünnen Schichten. Die Entspiegelungsschicht besteht in der Regel aus einer Mehrzahl übereinander angeordneter dünner Schichten von einigen 10 nm Dicke mit verschiedenen Brechungsindizes. Entspiegelungsschichten führen im Allgemeinen zu einem farbigen Restreflex, wobei die Reflexionsfarbe von der Lage des Maximums der Reflexionskurve als Funktion der Wellenlänge bestimmt wird. Entspiegelungsschichten lassen sich durch herkömmliche Beschichtungsverfahren, bspw. mittels Box-Coater, lediglich flächig undifferenziert aufbringen, so dass eine Wiedergabe eines beliebigen Reflexbildes durch selektives Weglassen eines Teils der Schichten der Entspiegelungsschicht bzw. eines Teils der kompletten Entspiegelungsschicht, jeweils auf wenigstens einer Oberfläche des beschichteten oder unbeschichteten Brillenglases, auf diese Weise nicht möglich ist.

Im Stand der Technik ist bereits bekannt, sich derartige Reflexbilder auf Brillengläsern, die durch selektives Weglassen einer kompletten Entspiegelungsschicht oder eines Teils der Schichten der Entspiegelungsschicht entstehen, zunutze zu machen. Die Darstellung des Reflexbildes auf wenigstens einer Oberfläche eines Brillenglases erfolgt hierbei über ein aufwendig herzustellendes Cliché, das sich nur für Brillengläser, welche in größeren Stückzahlen gefertigt werden, wirtschaftlich lohnt, da pro Produktionslinie und darzustellendes Reflexbild ein Cliche vorgehalten werden muss. Mittels Cliche werden Reflexbilder insbesondere bei in relativ hohen Stückzahlen hergestellten Sonnenbrillengläsern ohne Korrekturwirkung aufgebracht. Für Kleinserien, für die sich die Anfertigung eines Cliches nicht rentiert, kann beispielsweise mit selbstklebenden Masken gearbeitet werden.

Die US 2009/0081378 A1 offenbart beschichtete Linsen und en Verfahren zur Beschichtung von Linsen.

Die US 2014/0099439 A1 offenbart ein Verfahren zur Herstellung optischer Linsen.

Weiterer Stand der Technik ist in US2014300856 (Drucken von 2D matrix Code auf Brillenlinsenoberfläche) und US2014016083 (Farbeffekt mit Interferenzschichtsystem für Brillenlinsenmarkierung) zu finden.

Der Erfindung liegt daher die Aufgabe zugrunde, das Verfahren der vorstehend genannten Art dahingehend weiterzubilden, dass die genannten Nachteile vermieden werden. Insbesondere soll ermöglicht werden, Verfahren zur Erzeugung einer Beschichtung auf einer Oberfläche eines beschichteten oder eines unbeschichteten Brillenglases dahingehend zu modifizieren, dass die Nachteile, die mit der Herstellung und Verwendung eines Cliches oder einer selbstklebenden Maske einhergehen, vermieden werden. Insbesondere liegt der vorliegenden Erfindung die Aufgabe zugrunde, derartige Brillengläser in kleinen Stückzahlen kostengünstig und hochautomatisiert herstellen zu können. Weiterhin soll dies mit Rückgriff auf bereits vorhandene Vorrichtungen ermöglicht werden.

Die Erfindung ist in den Ansprüchen definiert.

Das hierin vorgeschlagene Verfahren zur Erzeugung einer Beschichtung auf wenigstens einer Oberfläche eines beschichteten oder unbeschichteten Brillenglases ermöglicht die Darstellung von wenigstens einem Reflexbild auf wenigstens einer Oberfläche eines Brillenglases unter Rückgriff auf bereits bekannte Verfahren und Vorrichtungen. Hierzu kommen gewöhnliche Matrixdrucker zum Einsatz, die die wenigstens eine Maskierung durch Setzen von einzelnen kleinen Bildpunkten bzw. Pixeln erzeugen. Dadurch kann jede beliebige Schrift und/oder jede beliebige Grafik auf wenigstens einen Teilbereich wenigstens einer Oberfläche des beschichteten oder unbeschichteten Brillenglases als wenigstens eine Maskierung aufgebracht werden. Wird nun zumindest eine weitere Schicht, beispielsweise eine Entspiegelungsschicht, ein Teil der Schichten einer Entspiegelungsschicht, eine Verspiegelungsschicht oder ein Teil der Schichten einer Verspiegelungsschicht, auf dieselbe wenigstens eine Oberfläche aufgebracht und im Anschluss die wenigstens eine Maskierung mitsamt der darauf vorliegenden zumindest einen Schicht, insbesondere einer Entspiegelungsschicht, einem Teil der Schichten einer Entspiegelungsschicht, eine Verspiegelungsschicht oder ein Teil der Schichten einer Verspiegelungsschicht von dem wenigstens einen Teilbereich der wenigstens einen Oberfläche entfernt, verbleibt diese zumindest eine weitere Schicht lediglich in dem unmaskierten Bereich dieser Oberfläche. Somit definiert die wenigstens eine Maskierung wenigstens ein Reflexbild auf wenigstens einer Oberfläche des beschichteten oder unbeschichteten Brillenglases, wobei das Reflexbild unterschiedliche, detektierbare Reflexionseigenschaften aufweist. Das vorliegende Verfahren kann somit zur gezielten Erzeugung von definiert mehrfarbigen Reflexbildern auf wenigstens einer Oberfläche eines Brillenglases verwendet werden. Dies ist unter anderem für ästhetische Zwecke vorteilhaft, bspw. für Abbildungen auf verspiegelten Sonnenbrillengläsern, aber auch zur Informationsübermittlung durch bspw. ein Firmenlogo.

Die bei einem Matrixdruckverfahren eingesetzte Technik erfolgt im Gegensatz zu Impact-Druckverfahren berührungsfrei, das heißt, dass der Druckkopf die wenigstens eine Oberfläche des beschichteten oder unbeschichteten Brillenglases nicht berührt. Beispielhafte Matrixdrucker umfassen Laserdrucker, Thermodrucker und Tintenstrahldrucker. Ein Vorteil dieser berührungsfreien Matrixdruckverfahren besteht darin, dass die wenigstens eine Oberfläche des beschichteten oder unbeschichteten Brillenglases keiner mechanischen Belastung ausgesetzt wird, wie dies beispielsweise bei einem Impact-Druckverfahren, bei dem Bedrucken durch ein Cliche bzw. dem Aufbringen einer selbstklebenden Maske der Fall wäre. Somit werden mechanische Beschädigungen der mit wenigstens einer Maskierung zu versehenden Oberfläche des beschichteten oder unbeschichteten Brillenglases vermieden. Weiterhin können im Matrixdruckverfahren nahezu beliebige, lediglich durch das Druckverfahren selbst begrenzte Auflösungen bereitgestellt werden, wodurch auch die Realisierung detaillierter Reflexbilder ohne Weiteres ermöglicht wird. Letztlich hat sich gezeigt, dass die erfindungsgemäßen Brillengläser in Schichthaftungstests, wie z.B. einem Bewitterungstest oder einem Kochtest, vergleichbare oder zumindest keine schlechteren Ergebnisse erzielen als flächig beschichtete Brillengläser, d.h. Brillengläser, bei denen die Beschichtung nicht nach dem erfindungsgemäßen Verfahren mittels wenigstens einer Maskierung unterbrochen wurde.

Das erfindungsgemäße Verfahren kann als zumindest eine Schicht jeglicher Art von Schicht und Anzahl an Schichten verwenden. Es ist klar, dass hierbei auch herkömmliche Schichten, wie beispielsweise eine Entspiegelungsschicht, eine Verspiegelungsschicht, eine Clean-Coat-Schicht, eine Antibeschlag-Beschichtung oder eine elektrisch leitfähige Schicht, auf die wenigstens eine Oberfläche eines beschichteten oder unbeschichteten Brillenglases aufgebracht werden können, die diese Oberfläche zur Gänze bedecken. Beispielsweise können auf das beschichtete oder unbeschichtete Brillenglas sukzessive drei Schichten aufgebracht werden, wobei lediglich die erste, zweite oder dritte Schicht auch auf wenigstens eine Maskierung aufgebracht wird. Alternativ kann die erste und dritte Schicht, oder die zweite und dritte Schicht auch auf wenigstens eine Maskierung aufgebracht werden. Bei einer Ausführungsform werden alle drei Schichten auch auf wenigstens eine Maskierung aufgebracht. Es ist klar, dass diese drei Schichten jeweils verschiedene chemische Zusammensetzungen und damit verschiedene optische Eigenschaften aufweisen können.

Die Erzeugung mehrerer Schichten einer Entspiegelungsschicht und/oder mehrerer Schichten einer Verspiegelungsschicht umfassend vorzugsweise einen Bragg-Spiegel, bspw. 2 bis 13 derartiger Schichten, 3 bis 9 derartiger Schichten, 4 bis 8 derartiger Schichten, 5 bis 7 derartiger Schichten, oder 6 derartige Schichten, unter Verwendung des erfindungsgemäßen Verfahrens ermöglicht die Erstellung von Reflexbildern mit mehreren Farben. Die Schichten weisen entsprechend ihrer chemischen Zusammensetzung unterschiedliche Reflexionsmaxima bzgl. der Belichtungswellenlänge auf. Mithin erzeugen derartige Schichten verschiedene Reflexfarben. Durch Weglassen einer oder mehrerer dieser Schichten in wenigstens einem Teilbereich wenigstens einer Oberfläche eines beschichteten oder unbeschichteten Brillenglases entstehen somit Reflexbilder unterschiedlicher Farbe bzw. Farbeffekte. Bspw. kann durch entsprechende Durchführung des erfindungsgemäßen Verfahrens ein Brillenglas erhalten werden, das in wenigstens einem Teilbereich wenigstens einer Oberfläche des Brillenglases eine Entspiegelungsschicht bestehend aus nur einer einzigen Schicht, und in einem anderen Teilbereich derselben Oberfläche des Brillenglases eine Entspiegelungsschicht bestehend aus mehreren Schichten aufweist. Eine Entspiegelungsschicht bestehend aus nur einer einzigen Schicht und eine Entspiegelungsschicht bestehend aus mehreren Schichten stellen jeweils andere Reflexfarben (bspw. im sichtbaren Wellenlängenbereich) bereit, wodurch ein Reflexbild mit verschieden Farben erhalten wird.

Das Reflexbild kann beispielsweise ein Muster, wie ein Logo, Buchstabe oder Schriftzug, sein. Vorzugsweise stellt das Reflexbild einen Informationsgehalt bereit, wie bspw. den Firmennamen und/oder Daten über den Linsenrohling, das Brillenglas-Halbfertigprodukt bzw. das fertige Brillenglas. Derartige Informationen können bspw. und vorzugsweise in Form eines 2D-Codes, bevorzugt Data-Matrix-Codes, auf wenigstens eine Oberfläche des beschichteten oder unbeschichteten Brillenglases aufgebracht werden. In diesem Fall ist es für gewöhnlich nicht wünschenswert, dass ein derartig erzeugtes Reflexbild im sichtbaren Bereich liegt, es wird daher vorzugsweise im nicht-sichtbaren Bereich, bspw. dem kurzwelligen Bereich, erzeugt. Derartige Schichten sind dem Fachmann gut bekannt. Das Muster kann für verschiedene nach dem erfindungsgemäßen Verfahren hergestellte Schichten gleich, insbesondere deckungsgleich, oder verschieden sein. Durch entsprechende Kombination von Schichten an bestimmten Oberflächenbereichen des beschichteten oder unbeschichteten Brillenglases kann somit beispielsweise auch ein dreidimensionaler Barcode erzeugt werden. Dieser dreidimensionale Barcode kann Informationen tiefenmoduliert bereitstellen, wodurch eine höhere Informationsdichte im Vergleich zu beispielsweise einem Data-Matrix-Code erzielt werden kann.

Bei einem Reflexbild handelt es sich um ein Bild, das aufgrund von Unterschieden in den Reflexionseigenschaften zweier Bereiche wenigstens einer Oberfläche eines beschichteten oder unbeschichteten Brillenglases hervorgerufen wird. Bei den Bereichen handelt es sich insbesondere zum einen um den mit wenigstens einer Maskierung bzw. vormals mit wenigstens einer Maskierung versehenen Teilbereich wenigstens einer Oberfläche, vorzugsweise vormals mit wenigstens einer Maskierung versehenen Teilbereich wenigstens einer Oberfläche, und zum anderen um dieselbe übrige Oberfläche des beschichteten oder unbeschichteten Brillenglases. Beispielsweise kann in dem vormals mit wenigstens einer Maskierung versehenen Teilbereich wenigstens einer Oberfläche keine Entspiegelungsschicht oder eine Entspiegelungsschicht mit weniger Schichten vorliegen als auf derselben übrigen Oberfläche des Brillenglases. Generelle, d.h. für den gesamten sichtbaren Spektralbereich vorliegende Unterschiede im Reflexionsgrad oder insbesondere wellenlängenspezifische Unterschiede im Reflexionsgrad können für einen Betrachter ein sichtbares Reflexbild hervorrufen, das bei wellenlängenspezifischem Verhalten auch farblich abgesetzt ist. Die Unterschiede in den Reflexionseigenschaften können das Reflexbild beispielsweise auch nur unter bestimmten Lichtbedingungen und/oder Betrachtungswinkeln für das menschliche Auge sichtbar machen.

Die durch das Matrixdruckverfahren erhaltene Struktur der wenigstens einen Maskierung und die erhaltene Struktur der auf der wenigstens einen Maskierung aufgebrachten Beschichtung kann ohne Weiteres durch geeignete Analyseverfahren bestimmt werden. Beispielsweise können mittels gewöhnlicher Lichtmikroskopie einzelne Bildpunkte/Pixel der aufgebrachten wenigstens einen Maskierung aufgelöst und identifiziert werden. Dies gilt auch für die auf der wenigstens einen Maskierung aufgebrachte Schicht nachdem vorzugsweise die Maskierung entfernt wurde, da an der Grenzlinie zwischen dem mit wenigstens einer Maskierung versehenen Teilbereich und dem unmaskierten Teilbereich wenigstens einer Oberfläche, vorzugsweise derselben Oberfläche, des beschichteten oder unbeschichteten Brillenglases die durch das Matrixdruckverfahren erhaltene Pixelstruktur in dem Randbereich, bzw. der Grenzlinie der aufgebrachten Schicht, widergespiegelt wird. Die auf derselben Oberfläche aufgebrachte Schicht weist ebenfalls eine Pixelstruktur auf, die zu der durch das Matrixdruckverfahren erzeugten wenigstens einen Maskierung an der Grenzlinie spiegelverkehrt bzw. invertiert vorliegt. Insofern erfährt das erfindungsgemäße beschichtete oder unbeschichtete Brillenglas durch das Matrixdruckverfahren eine identifizierbare strukturelle Eigenschaft, die beispielsweise einem Impact-Druckverfahren nicht zu eigen ist.

Die Entfernung der wenigstens einen Maskierung ist dem Fachmann bekannt und beruht auf dem gewählten Matrixdruckverfahren und/oder dem in diesem Matrixdruckverfahren verwendeten Druckmaterial. Handelt es sich bei dem Matrixdruckverfahren beispielsweise um ein Tintenstrahldruckverfahren, kann die Entfernung der wenigstens einen Maskierung mittels eines Lösungsmittels, beispielsweise eines organischen Lösungsmittels, erfolgen, das selektiv die Maskierung entfernt. Das Lösungsmittel wird dabei entweder so gewählt, dass die Oberfläche eines unbeschichteten Brillenglases bzw. eine auf einem beschichten Brillenglas vorliegende Schicht nicht durch das Lösungsmittel angegriffen wird. Alternativ erfolgt die Auftragung des Lösungsmittels vorzugsweise selektiv, das heißt lediglich in dem mit wenigstens einer Maskierung versehenen Teilbereich der wenigstens einen Oberfläche des beschichteten oder unbeschichteten Brillenglases. Die Entfernung der wenigstens einen Maskierung erfolgt hierbei vorzugsweise durch ein Lösungsmittel, bspw. ein organisches Lösungsmittel, wie beispielsweise Aceton, Butanon, Ethanol und/oder Isopropanol. Bevorzugt erfolgt die Entfernung der wenigstens einen Maskierung durch Aceton oder ein Aceton enthaltendes Lösungsmittel. Besonders bevorzugt wird die wenigstens eine Maskierung sowie die darauf vorliegende zumindest eine Schicht mittels eines Tuchs, vorzugsweise mittels eines Baumwolltuchs, oder mittels einer Bürste, welche jeweils mit wenigstens einem organischen Lösungsmittel, vorzugsweise Aceton und/oder Ethanol getränkt sind, entfernt. Alternativ kann die Entfernung auch durch einfaches Abwischen nach Inkontaktbringen der wenigstens einen Maskierung sowie der darauf aufgebrachten Schicht mit wenigstens einem Lösungsmittel oder eine Kombination von Abwischen, bspw. durch ein Baumwolltuch, und anschließender Immersion des Brillenglases in eines der vorstehend genannten Lösungsmittel erfolgen. Es ist klar, dass ein oder mehrere Immersionsschritte (mit ggf. verschiedenen Lösungsmitteln) ggf. mit einem oder mehreren Abwischschritten in beliebiger Reihenfolge kombiniert werden können. Als Tintenstrahldrucker kann bspw. der X-Cube Lens Digi-Speed Printer von TECO, Frankreich, verwendet werden. Als weiterer geeigneter Tintenstrahldrucker kann ein Drucker der Notion Systems GmbH, Deutschland eingesetzt werden, wobei als geeignete Druckköpfe der Druckkopf Galaxy PH 256/80 mit etwa 177.17 px/cm (450 dpi) und vorzugsweise der Galaxy PH 256/30 mit etwa 354.34 px/cm (900 dpi) (beide Fujifilm Dimatix, USA) verwendet werden können. Weitere geeignete Druckköpfe umfassen Druckköpfe der Xaar 1000er Serie (von Xaar, Europa), bspw. der Xaar 1001, der beispielsweise mit dem Drucker Teco X-302 unter Verwendung der Tinte Teco T002 LED (UV-härtend) (beide TECO, Frankreich) betrieben werden kann.

Ein "Matrixdruckverfahren", wie hierin verwendet, betrifft ein berührungsfreies Druckverfahren, bei dem ein ausgedrucktes Muster oder ein ausgedrucktes Zeichen aus einzelnen Pixeln zusammengesetzt ist. Der Begriff "Tintenstrahldruckverfahren" bezeichnet im Rahmen der vorliegenden Anmeldung ein berührungsfreies Druckverfahren, bei dem ein ausgedrucktes Muster oder ein ausgedrucktes Zeichen aus einzelnen aus Tinte bestehenden Pixeln zusammengesetzt ist. Derartige berührungsfreie Druckverfahren erfordern keine Druckform, wie bspw. ein Cliché.

Im Rahmen der vorliegenden Anmeldung betrifft ein "Brillenglas" ein Brillenglas gemäß DIN EN ISO 13666:2013-10, Abschnitt 8.1.2, nämlich ein Augenglas, das vor dem Auge, aber nicht in Kontakt mit dem Auge getragen wird, wobei ein Augenglas eine Linse ist, die zur Messung und/oder Korrektur von Fehlsichtigkeiten und/oder zum Schutz des Auges oder zur Änderung seines Aussehens dienen soll.

Bei dem "Brillenglas" kann es sich um einen Linsenrohling, ein Brillenglas-Halbfertigprodukt oder um ein fertiges Brillenglas handeln.

Der Begriff "Linsenrohling" betrifft gemäß dem Abschnitt 8.4.1. der Norm EN ISO 13666:2012 ein üblicherweise vorgeformtes Materialstück zur Herstellung einer Linse in irgendeinem Zustand vor der Beendigung der Oberflächenbearbeitung.

Der Begriff "Brillenglas-Halbfertigprodukt" betrifft gemäß dem Abschnitt 8.4.2. der Norm EN ISO 13666:2012 einen Linsenrohling mit nur einer optisch fertig bearbeiteten Fläche.

Der Begriff "fertiges Brillenglas" betrifft gemäß den Abschnitten 8.4.6. bis 8.4.8. der Norm EN ISO 13666:2012 ein Brillenglas mit zwei fertig bearbeiteten optischen Flächen. Es kann sich um ein Brillenglas vor oder nach der Randbearbeitung handeln.

Im Rahmen der vorliegenden Anmeldung betrifft die "Oberfläche des beschichteten oder unbeschichteten Brillenglases" die gesamte Vorderfläche bzw. objektseitige Fläche des beschichteten oder unbeschichteten Brillenglases und/oder die gesamte Rückfläche bzw. augenseitige Fläche des beschichteten oder unbeschichteten Brillenglases. Andernfalls wird in der Regel auf einen "Teilbereich der Oberfläche" abgestellt, d.h. einen flächenmäßiger Anteil von weniger als 100% der gesamten Vorderfläche bzw. der objektseitigen Fläche und/oder der gesamten Rückfläche bzw. der augenseitigen Fläche jeweils des beschichteten oder unbeschichteten Brillenglases. Die "Oberfläche" kann die Vorderfläche und/oder die Rückfläche des beschichteten oder unbeschichteten Brillenglases sein.

Die Beschichtung auf der wenigstens einen Oberfläche eines beschichteten oder unbeschichteten Brillenglases erfolgt entweder auf der Vorderfläche oder objektseitigen Fläche oder auf der Rückfläche oder augenseitigen Fläche jeweils des beschichteten oder unbeschichteten Brillenglases. Der Begriff "Vorderfläche" oder objektseitige Fläche bezeichnet gemäß Abschnitt 5.8. der Norm DIN EN ISO 13666:2012 die Fläche eines Brillenglases, die bestimmungsgemäß in der Brille vom Auge abgewandt liegt. Der Begriff "Rückfläche" oder augenseitige Fläche bezeichnet gemäß Abschnitt 5.1.9 der Norm DIN EN ISO 13666:2012 die Fläche eines Brillenglases, die bestimmungsgemäß in der Brille dem Auge zugewandt liegt. Bei einer bevorzugten Ausführungsform der Erfindung erfolgt die Beschichtung gemäß dem erfindungsgemäßen Verfahren auf der Vorderfläche oder objektseitigen Fläche eines beschichteten oder unbeschichteten Brillenglases.

Der Begriff "spektraler Transmissionsgrad" oder "Transmission" bezeichnet gemäß Abschnitt 15.2 der Norm DIN EN ISO 13666:2012 das Verhältnis der spektralen Strahlungsleistung, die von dem jeweiligen Material durchgelassen wird, zur auftreffenden Strahlungsleistung für eine bestimmte Wellenlänge (λ).

Der Begriff "Lichttransmissionsgrad" bezeichnet gemäß Abschnitt 15.4 der Norm DIN EN ISO 13666:2012 das Verhältnis des von dem Brillenglas oder Filter bzw. hier von der Beschichtung durchgelassenen Lichtstroms zum einfallenden Lichtstrom. Er erfolgt hierbei eine Gewichtung mit der Empfindlichkeitsfunktion des menschlichen Auges für Tagsehen und der spektralen Strahlungsverteilung der CIE-Normlichtart D65. Abweichend von der oben genannten Norm kann hierbei ein Wellenlängenbereich von 400 nm bzw. 460 nm bis 700 nm bzw. 780 nm berücksichtigt werden.

Der Begriff "Beschichtung" kann sich im Rahmen der vorliegenden Erfindung beispielsweise auf eine Entspiegelungsschicht, eine Hartbeschichtung, eine Antibeschlagschicht, eine Clean-Coat-Schicht, eine elektrisch leitende oder elektrisch halbleitende Schicht und/oder eine Verspiegelungsschicht beziehen. Bevorzugt wird das erfindungsgemäße Verfahren unter Verwendung einer Entspiegelungsschicht und/oder einer Verspiegelungsschicht durchgeführt. Wird sowohl eine Entspiegelungsschicht als auch eine Verspiegelungsschicht gemäß dem erfindungsgemäßen Verfahren aufgebracht, ist es bevorzugt, dass sich die Verspiegelungsschicht auf der Vorderfläche und die Entspiegelungsschicht auf der Rückfläche des beschichteten oder unbeschichteten Brillenglases befinden. Alternativ kann bei der Aufbringung einer Entspiegelungsschicht und einer Verspiegelungsschicht jeweils auf der Vorderfläche eines beschichteten oder unbeschichteten Brillenglases wenigstens eine dieser beiden Schichten gemäß dem erfindungsgemäßen Verfahren aufgebracht werden, wobei bevorzugt die Verspiegelungsschicht die weiter augenseitig aufgebrachte Schicht darstellt. Wird das erfindungsgemäße Verfahren nur unter Zuhilfenahme der Entspiegelungsschicht oder nur unter Zuhilfenahme der Verspiegelungsschicht durchgeführt, befindet sich die Entspiegelungsschicht bevorzugt auf der Rückfläche und die Verspiegelungsschicht bevorzugt auf der Vorderfläche eines beschichteten oder unbeschichteten Brillenglases.

Die Verspiegelungsschicht kann als dielektrische Beschichtung mit einer Schichtfolge hochbrechender und niedrigbrechender Schichten ausgeführt sein. Ein derartiger dielektrischer Spiegel bzw. Filter kann auch als Bragg-Reflektor bezeichnet werden. Optional kann eine derartige Beschichtung auch mittelbrechende Schichten mit einem Brechungsindex, welcher zwischen den Brechungsindizes hochbrechender und niedrigbrechender Schichten liegt, aufweisen. Alternativ kann die Verspiegelungsschicht wenigstens eine semitransparente Metallschicht umfassen. Die wenigstens eine semitransparente Metallschicht kann hierbei beispielsweise eine Aluminiumschicht, Chromschicht, Goldschicht und/oder eine Silberschicht umfassen. Die Schichtdicke der semitransparenten Metallschicht liegt bevorzugt in einem Bereich von 4 nm bis 48 nm, besonders bevorzugt in einem Bereich von 8 nm bis 41 nm und ganz besonders bevorzugt in einem Bereich von 17 nm bis 33 nm. Verspiegelungsschichten sind bspw. aus der EP 2 685 306 A1 bekannt. Vorzugsweise werden Vakuumbeschichtungsverfahren zum Aufbringen der Verspiegelungsschicht verwendet, beispielsweise durch Verdampfen bzw. Aufdampfen, Sputtern bzw. Kathodenzerstäubung oder chemische Gasphasenabscheidung. Ein Box-Coater kann zur Schichterzeugung verwendet werden. Geeignete Box-Coater umfassen beispielsweise die Box-Coater der Syrus Serie der Bühler Leybold Optics GmbH, Deutschland. Die Verspiegelungsschicht befindet sich vorzugsweise auf der Vorderfläche eines beschichteten oder unbeschichteten Brillenglases.

Die Schichten eines beschichteten oder unbeschichteten Brillenglases bzw. zumindest eine oder mehrere weitere Schichten, die nach Entfernung der wenigstens einen Maskierung auf wenigstens einem Teil der Oberfläche des beschichteten oder unbeschichteten Brillenglases vorliegt bzw. vorliegen, können jegliche Brillenglasbeschichtungen umfassen. Beispiele hierfür sind eine Hartbeschichtung, Entspiegelungsschicht bzw. Antireflexbeschichtung, schmutzabweisende Beschichtung, hydrophobe Beschichtung, hydrophile Beschichtung, Antibeschlag-Beschichtung, Antistatik-Beschichtung, Clean-Coat-Schicht und Verspiegelungsschicht. Bei einer bevorzugten Ausführungsform der Erfindung umfasst die zumindest eine Schicht, welche nach dem erfindungsgemäßen Verfahren auf die wenigstens eine Maskierung und auf den nicht mit der wenigstens einen Maskierung versehenen Teilbereich derselben Oberfläche des beschichteten oder unbeschichteten Brillenglases aufgetragen wird, wenigstens eine Entspiegelungsschicht oder wenigstens eine Verspiegelungsschicht. Sowohl die Entspiegelungsschicht als auch die Verspiegelungsschicht können hierbei wenigstens eine Schicht umfassen. Bei dieser Ausführungsform umfasst die Entspiegelungsschicht bevorzugt mehrere Schichten, wie vorstehend beschrieben. Bei dieser Ausführungsform umfasst die Verspiegelungsschicht bevorzugt wenigstens eine semitransparente Metallschicht, bevorzugt aus oder mit Aluminium, Chrom, Gold und/oder Silber.

Gemäß Abschnitt 16. der Norm EN ISO 13666:2012 ist ein beschichtetes Brillenglas ein Brillenglas, auf das eine oder mehrere Oberflächenbeschichtungen aufgebracht wurden, um eine oder mehrere seiner Eigenschaften zu ändern. Eine Hartbeschichtung ist eine Beschichtung, durch die die Abriebfestigkeit der Oberfläche eines Brillenglases aus organischem Werkstoff bei normalem Gebrauch verbessert werden soll. Eine Entspiegelungsschicht ist eine Beschichtung auf der Oberfläche eines Brillenglases, durch die der Anteil des Lichtes, das von seiner Oberfläche reflektiert wird, verringert werden soll. Eine schmutzabweisende Beschichtung ist eine Beschichtung, die die Anhaftung von Staub und/oder Fett reduzieren und/oder die Reinigung vereinfachen soll. Eine hydrophobe Beschichtung ist eine Beschichtung auf der Oberfläche eines Brillenglases, durch die Wassertropfen abperlen sollen. Eine hydrophile Beschichtung ist eine Beschichtung auf der Oberfläche eines Brillenglases, die sehr gute Durchnässung ermöglichen soll, damit sich Wassertropfen auf ihr ausbreiten und zu einem gleichmäßigen Film auf der Oberfläche zusammenfließen. Eine Antibeschlag-Beschichtung ist eine hydrophobe oder hydrophile Beschichtung auf der Oberfläche eines Brillenglases, durch die das Anlaufen der Brillenglasoberfläche gemindert werden soll, welches durch Tropfen oder kondensierten Wasserdampf entsteht, wenn ein relativ kaltes Brillenglas in eine wärmere, feuchte Umgebung gebracht wird. Eine Antistatik-Beschichtung ist eine Beschichtung, welche die statische Aufladung auf einer Brillenglas-Oberfläche reduzieren soll, damit kein Staub angezogen wird, wobei die Antistatik-Beschichtung eine separate Schicht sein kann, oder mit einer der anderen vorstehend erwähnten Beschichtungen kombiniert sein kann. Eine Clean-Coat-Schicht umfasst vorzugsweise ein Material mit oleophoben und hydrophoben Eigenschaften, wie beispielsweise in EP 1 392 613 A1 offenbart, auf dem Wasser einen Kontaktwinkel von mehr als 90°, bevorzugt von mehr als 100° und besonders bevorzugt mehr als 110° einnimmt. Die Clean-Coat-Schicht umfasst bevorzugt eine fluororganische Schicht gemäß DE 198 48 591 A1, Anspruch 1, oder eine Schicht auf Basis von Perfluorpolyethern.

Eine Verspiegelungsschicht betrifft eine verspiegelte Schicht, die eine verstärkende Interferenz des einfallenden Lichts, vorzugsweise des einfallenden Lichts im sichtbaren Wellenlängenbereich, bereitstellt. Im Gegensatz zur Entspiegelungsschicht, deren Reflexminderung durch auslöschende Interferenz erzielt wird, kann durch verstärkende Interferenz die Verspiegelung bewirkt werden. Durch unterschiedliche Dicken der Interferenzschichten können unterschiedliche Reflexfarben der jeweiligen Schicht erreicht werden. Der Verspiegelungseffekt - die von einem Beobachter wahrzunehmende Intensität der Verspiegelung - ist unter anderem abhängig von der Grundtönung des Brillenglases.

Die der Erfindung zugrunde liegende Aufgabe wird vollkommen gelöst.

Gemäß einer bevorzugten Ausführungsform der vorliegenden Erfindung ist die zumindest eine Schicht, welche auf die wenigstens eine Maskierung und auf den nicht mit wenigstens einer Maskierung versehenen Teilbereich derselben Oberfläche aufgebracht wird, eine Entspiegelungsschicht oder eine Verspiegelungsschicht. Gemäß dieser bevorzugten Ausführungsform umfasst die Entspiegelungsschicht mehrere Schichten, wie bereits vorstehend ausgeführt. Weiterhin umfasst die Verspiegelungsschicht gemäß dieser bevorzugten Ausführungsform wenigstens eine semitransparente Metallschicht, bevorzugt umfassend wenigstens eine Schicht aus oder mit Aluminium, Gold, Chrom, Wolfram, Tantal und/oder Silber, besonders bevorzugt aus oder mit Aluminium, Gold und/oder Silber. Die Entspiegelungsschicht wirkt hierbei im Bereich des sichtbaren Lichts, des nicht sichtbaren Lichts oder teilweise in dem Bereich von sichtbarem Licht. Geeignete Entspiegelungsschichten sind dem Fachmann bekannt und können bspw. der EP 2 437 084 A1, EP 2 437 085 A1 und der DE 10 2013 208 310 A1 entnommen werden. Gemäß dieser bevorzugten Ausführungsform kann das erfindungsgemäße Verfahren unter Verwendung einer Entspiegelungsschicht entweder auf der Vorderfläche und/oder auf der Rückfläche eines beschichteten oder unbeschichteten Brillenglases ausgeführt werden. Bevorzugt wird die Vorderfläche eines beschichteten oder unbeschichteten Brillenglases für das erfindungsgemäße Verfahren unter Verwendung einer Entspiegelungsschicht verwendet. Die Entspiegelungsschicht umfasst bei dieser Ausführungsform bevorzugt eine Metalloxid-, Metallhydroxid- und/oder Metalloxidhydratschicht aus oder mit Silizium, welche bevorzugt die äußerste Schicht der Entspiegelungsschicht ausbildet. Unter äußerster Schicht wird in diesem Zusammenhang diejenige Schicht der Entspiegelungsschicht verstanden, welche sich auf dem beschichteten oder unbeschichteten Brillenglas am weitesten augenseitig bzw. am weitesten objektseitig befindet. Weiterhin gemäß dieser bevorzugten Ausführungsform wird die Vorderfläche eines beschichteten oder unbeschichteten Brillenglases für das erfindungsgemäße Verfahren unter Verwendung einer Verspiegelungsschicht verwendet. Die Entspiegelungsschicht umfasst bei dieser Ausführungsform bevorzugt eine Metalloxid-, Metallhydroxid- und/oder Metalloxidhydratschicht aus oder mit Silizium, welche bevorzugt die äußerste Schicht der Entspiegelungsschicht ausbildet. Unter äußerster Schicht wird in diesem Zusammenhang diejenige Schicht der Entspiegelungsschicht verstanden, welche sich auf dem beschichteten oder unbeschichteten Brillenglas am weitesten augenseitig bzw. am weitesten objektseitig befindet.

Bei den Materialien TiO₂, SiO₂ und Al₂O₃ handelt es sich um klassische Materialien zur Herstellung optischer Schichtsysteme. Insbesondere werden TiO₂ als hochbrechendes Material und SiO₂ als niedrigbrechendes Material aufgrund ihres hohen Transparenzgrades zur Herstellung von Entspiegelungsschichten von Brillengläsern eingesetzt. Einzeln wirken diese Schichten wie übliche oxidische Schichten ohne eine wesentliche Leitfähigkeit. Die Entspiegelungsschicht kann wenigstens eine elektrisch leitfähige oder halbleitende Schicht, beispielsweise eine Schicht aus oder mit Indium-Zinn-Oxid ((((In₂O₃)_{0.9} (SnO₂)_{0.1}; ITO), Fluor-Zinn-Oxid (SnO₂:F; FTO), Aluminium-Zink-Oxid (ZnO:Al; AZO) und/oder Antimon-Zinn-Oxid (SnO₂:Sb; ATO), bevorzugt eine Schicht aus oder mit ITO bzw. aus oder mit FTO umfassen. Insbesondere bei unbeschichteten Kunststoffbrillengläsern wird die Entspiegelungsschicht nicht unmittelbar auf wenigstens eine Oberfläche des Brillenglases aufgebracht, sondern eine Hartbeschichtung ist zwischen dem unbeschichteten Kunststoffbrillenglas und der Entspiegelungsschicht vorgesehen. Wie bereits vorstehend erwähnt, kann die Entspiegelungsschicht mehrere Schichten, wie bspw. 2 bis 13 Schichten, aufweisen. Die Oberfläche schließt hierbei die Vorderfläche und/oder die Rückfläche des beschichteten oder unbeschichteten Brillenglases ein. Zwischen den einzelnen Schichten einer Entspiegelungsschicht, die nach dem erfindungsgemäßen Verfahren erzeugt werden, können eine oder mehrere Schichten einer Entspiegelungsschicht vorliegen, die die wenigstens eine Oberfläche des beschichteten oder unbeschichteten Brillenglases vollständig bedecken. Somit können beide Oberflächen des beschichteten oder unbeschichteten Brillenglases mit einer beliebigen Schichtfolge versehen werden. Es ist klar, dass ein Reflexbild in der Entspiegelungsschicht nur manchmal, unter bestimmten Lichtbedingungen und Winkeln, sichtbar ist.

Bei einer Ausführungsform der Erfindung kann die Entspiegelungsschicht einen ein- oder mehrschichtigen Aufbau haben, wobei mindestens eine Schicht der Entspiegelungsschicht erfindungsgemäß hergestellt ist. Vorzugsweise wird für eine Entspiegelungsschicht ein zwei-, drei, vier-, fünf- oder sechsschichtiger Aufbau gewählt. Bei Entspiegelungsschichten mit einem zwei- oder mehrschichtigen Aufbau ist eine Schichtabfolge von Vorteil, bei der an eine Schicht mit einem niedrigen Brechungsindex eine Schicht mit einem hohen Brechungsindex angrenzt. In anderen Worten ist es für einen derartigen mehrschichtigen Aufbau günstig, dass sich Schichten mit einem niedrigen Brechungsindex und Schichten mit einem hohen Brechungsindex alternierend abwechseln. Zusätzlich können weitere Schichten, beispielsweise Haftschichten (z.B. mit einer Dicke in einem Bereich von ca. 5nm bis 5µm) vorgesehen werden, die keine optische Funktion aufweisen müssen, die jedoch für die Beständigkeit, Haftungseigenschaften, Klimabeständigkeit, etc., vorteilhaft sein können. Beispielsweise ist es auch möglich, die vorstehende Entspiegelungsschicht durch eine Verspiegelungsschicht umfassend beispielsweise ein oder mehrere Schichten zu ersetzen oder sowohl eine Entspiegelungsschicht auf der Rückfläche als auch eine Verspiegelungsschicht auf der Vorderfläche eines beschichteten oder unbeschichteten Brillenglases vorzusehen. Im letzteren Fall kann das erfindungsgemäße Verfahren unter Zuhilfenahme nur der Entspiegelungsschicht, unter Zuhilfenahme nur der Verspiegelungsschicht oder unter Zuhilfenahme der Entspiegelungsschicht und der Verspiegelungsschicht durchgeführt werden. Bei gleichzeitiger Anwesenheit einer Entspiegelungsschicht und einer Verspiegelungsschicht ist es für die Durchführung des erfindungsgemäßen Verfahrens unter Zuhilfenahme der Entspiegelungsschicht bevorzugt, wenn die Verspiegelungsschicht das Erkennen wenigstens eines Reflexbilds auch auf der Rückfläche eines beschichteten oder unbeschichteten Brillenglases ermöglicht.

Beispiele für geeignete Materialien für eine solche Entspiegelungs- bzw. Verspiegelungsschichten sind z.B. Silizium oder Bor, aber auch Oxide, Fluoride, Silizide, Boride, Carbide, Nitride sowie Sulfide von Metallen und Nichtmetallen. Für das Beschichten können diese Substanzen einzeln oder auch als Gemisch von zwei oder mehreren dieser Materialien eingesetzt werden.

Insbesondere eignen sich für das Erzeugen einer Entspiegelungsschicht die Materialien SiO, SiO₂, ZrO₂, Al₂O₃, TiO, TiO₂, Ti₂O₃, Ti₃O₄, Ti₃O₅, CrOₓ (mit x = 1-3) und Cr₂O₃, wie z.B. Cr₂O₃, Y₂O₃, Yb₂O₃, MgO, Nb₂O₅, Ta₂O₅, CeO₂ und HfO₂ etc. oder entsprechende Mischoxide, die Materialien MgF₂, AlF₃, BaF₂, CaF₂, Na₃AlF₆ und Na₅Al₃F₁₄, sowie die für das Erzeugen einer Verspiegelungsschicht umfassend wenigstens eine semitransparente Metallschicht die Metalle Cr, W, Ta, Ag und Au. Vorstehend genannte Materialien für das Erzeugen einer Entspiegelungsschicht können bei geeigneter Kombination und/oder Schichtdicke, optional unter Verwendung wenigstens eines der vorstehend genannten Metalle auch für das Erzeugen einer Verspiegelungsschicht (Bragg-Spiegel) herangezogen werden.

Beschichtungen, insbesondere eine Entspiegelungsschicht oder eine Verspiegelungsschicht, können durch übliche Verfahren aufgebracht werden, wobei es bevorzugt ist, die einzelnen Schichten mittels Aufdampfen, Sputtern, CVD (Chemical Vapour Deposition) und/oder mittels PVD (Physical Vapour Deposition) - insbesondere mittels plasmagestützter PVD-Verfahren zu erzeugen. Besonders bevorzugt ist es, eine Entspiegelungsschicht mittels Abscheiden aus einer Dampfphase so aufzubringen, dass eine verdichtete Schicht mit einer hohen Abriebfestigkeit gebildet wird. Ein Box-Coater kann zur Schichterzeugung mittels PVD-Verfahren verwendet werden. Geeignete Box-Coater umfassen z.B. die Box-Coater der Syrus Serie der Bühler Leybold Optics GmbH, Deutschland.

Die Gesamtschichtdicke dA einer Entspiegelungsschicht mit einem ein- oder mehrschichtigen Aufbau unterliegt grundsätzlich keiner besonderen Beschränkung. Sie wird jedoch vorzugsweise auf eine Gesamtschichtdicke dA mit dA ≤ 2000 nm, vorzugsweise dA ≤ 1500 nm, besonders bevorzugt dA ≤ 500 nm eingestellt. Die Mindestgesamtschichtdicke dAm der Entspiegelungsschicht liegt jedoch möglichst bei etwa dAm ≥ 100 nm. Bevorzugt weist die Entspiegelungsschicht eine Gesamtschichtdicke aus einem Bereich von 97 nm bis 2000 nm, bevorzugt aus einem Bereich von 112 nm bis 1600 nm, weiter bevorzugt aus einem Bereich von 121 nm bis 1110 nm, besonders bevorzugt aus einem Bereich von 132 nm bis 760 nm und ganz besonders bevorzugt aus einem Bereich von 139 nm bis 496 nm auf. Vorstehende angegebene Gesamtschichtdicken der Entspiegelungsschicht beziehen sich jeweils auf die Entspiegelungsschicht auf demjenigen Teil der Oberfläche des beschichteten oder unbeschichteten Brillenglases, welcher nicht gemäß dem erfindungsgemäßen Verfahren durch wenigstens eine Maskierung unterbrochen wurde.

Beispielsweise kann eine solche Entspiegelungsschicht aus abwechselnden hoch- bzw. niederbrechenden Schichten aus TiO₂ bzw. SiO₂ aufgebaut sein, mit beispielsweise λ/8-TiO₂, λ/8-SiO₂, λ/2-TiO₂ und λ/4-SiO₂, wobei die angegebene Schichtdicke hier bevorzugt auf die Wellenlänge λ = 550 nm bezogen ist. Eine solche Entspiegelungsschicht mit Mehrfachschichtaufbau wird vorzugsweise mittels bekannter PVD-Verfahren erzeugt.

Bei geeigneter Wahl von Schichtfolgen unterschiedlicher Brechungsindizes kann auch eine verspiegelnde Wirkung erreicht werden. Die Verspiegelungsschicht wird in diesem Fall durch eine Interferenzbeschichtung gebildet, deren Wirkung auf konstruktiver Interferenz beruht. So kann durch die örtlich gezielte Schichtfolge von optisch wirksamen Schichten mit unterschiedlichen Brechzahlen sowohl eine Verminderung (Entspiegelung) als auch einen Verstärkung (Verspiegelung) der Lichtreflexion des Brillenglases erreicht werden. Es versteht sich, dass noch weitere Schichten, beispielsweise eine Schutzschicht gegen Verkratzen oder eine elektrisch leitfähige und/oder antistatische Schicht, um eine antistatische Wirkung zu erzielen, auf wenigstens eine Oberfläche eines beschichteten oder unbeschichteten Brillenglases aufgebracht werden können . Zusätzliche Schichten können insbesondere auch innerhalb einer Schichtfolge der in der nachfolgenden Beschreibung angegebenen Ausführungsformen eingefügt werden, um zusätzliche Funktionalitäten zu erzielen. Beispielweise kann das Einfügen einer ca. 3 nm dünnen ITO-Schicht innerhalb einer in der nachfolgenden Beschreibung angegebenen Schichtfolge antistatische Wirkung erzielen, ohne wesentlichen Einfluss auf die spektrale Reflektivität zu nehmen. Dabei kann es von Vorteil sein, die ITO-Schicht nicht als Abschlussschicht, sondern innerhalb der Schichtfolge einzufügen. Alternativ oder zusätzlich kann eine TiOₓ-Schicht mit x<2 verwendet werden. Es versteht sich, dass eine Wechselwirkung zwischen den Schichten der Beschichtung besteht, sodass keine Zergliederung vorgenommen werden kann, sondern bezüglich der optischen Eigenschaften, insbesondere bezüglich der winkelabhängigen Reflektivität, auf die Gesamtwirkung der Beschichtung abzustellen ist.

Eine beispielhafte Beschichtung umfasst unmittelbar auf wenigstens einer Oberfläche eines beschichteten oder unbeschichteten Brillenglases eine ZrO Schicht, gefolgt von fünf bis zwölf Schichten ausgewählt aus SiO₂, Ti₃O₅, ITO, und ZrO. Eine bevorzugte Schichtfolge aus eben diesen Schichten umfasst unmittelbar auf wenigstens einer Oberfläche eines beschichteten oder unbeschichteten Brillenglases eine (a) ZrO Schicht, gefolgt von einer (b) SiO₂ Schicht, (c) ITO Schicht oder ZrO Schicht, (d) ZrO Schicht oder ITO Schicht (mithin die jeweils andere Schicht als in Punkt (c)), (e) ZrO Schicht oder Ti₃O₅ Schicht, (f) ZrO Schicht oder Ti₃O₅ Schicht und (g) SiO₂ Schicht. Diese Schichten weisen jeweils Schichtdicken im Bereich von 2 nm bis 150 nm, vorzugsweise 5 nm bis 100 nm, auf. Mehr bevorzugt weist die eine oder mehrere ITO Schicht(en) jeweils eine Schichtdicke zwischen 2 nm und 8 nm auf, wobei die restlichen Schichten jeweils eine Schichtdicke zwischen 10 nm und 90 nm aufweisen.

Gemäß einer weiteren Ausführungsform der vorliegenden Erfindung ist das Matrixdruckverfahren ein Tintenstrahldruckverfahren. Das Druckbild wird bei einem Tintenstrahldrucker berührungslos durch die gezielte Positionierung oder das Ablenken kleiner Tintentröpfchen erzeugt. Bei dem Tintenstrahldrucker kann es sich um einen Continuous Inkjet Drucker oder einen Drop on Demand Drucker handeln. Die Tintenstrahltinte umfasst vorzugsweise wenigstens ein Lösungsmittel und/oder wenigstens eine strahlungshärtbare Komponente und/oder wenigstens ein Bindemittel und wenigstens ein Farbmittel sowie optional wenigstens ein Additiv. Eine lösungsmittelbasierte Tintenstrahltinte und/oder eine wasserbasierte Tintenstahltinte umfasst bevorzugt einen Lösungsmittelanteil aus einem Bereich von 10 Gew.-% bis 95 Gew.-%, besonders bevorzugt aus einem Bereich von 20 Gew.-% bis 94 Gew.-% und ganz besonders bevorzugt aus einem Bereich von 50 Gew.-% bis 93 Gew.-%, jeweils bezogen auf das Gesamtgewicht der Tintenstrahltinte. Die Verdunstungszahl des Lösungsmittels relativ zu Ether bei 20°C liegt hierbei bevorzugt in einem Bereich von 10 bis 300, besonders bevorzugt in einem Bereich von 20 bis 250 und ganz besonders bevorzugt in einem Bereich von 80 bis 200. Das wenigstens eine Lösungsmittel, welches in einer, gemäß der Drop on Demand Technologie eingesetzten, Tintenstrahltinte verwendet wird, weist bevorzugt einen Flammpunkt von wenigstens 61°C auf. Eine bevorzugt zur Aufbringung der wenigstens einen Maskierung eingesetzte strahlungshärtbare Tintenstrahltinte, insbesondere eine mittels UV-Licht härtbare Tintenstahltinte, umfasst vorzugsweise einen Lösungsmittelanteil aus einem Bereich von 0 Gew.-% bis 50 Gew.-%, besonders bevorzugt aus einem Bereich von 0 Gew.-% bis 10 Gew.-%, jeweils bezogen auf das Gesamtgewicht der strahlungshärtbaren Tintenstrahltinte. Die strahlungshärtbare Komponente der strahlungshärtbaren Tintenstrahltinte wirkt bevorzugt gleichzeitig als Bindemittel. Bevorzugt liegt der Anteil an strahlungshärtbarer Komponente, z.B. flüssigen Oligomeren und Monomeren, in einem Bereich von 1 Gew.-% bis 99 Gew.-%, besonders bevorzugt in einem Bereich von 30 Gew.-% bis 80 Gew.-% und besonders bevorzugt in einem Bereich von 40 Gew.-% bis 75 Gew.-%, jeweils bezogen auf das Gesamtgewicht der Tintenstrahltinte. Die strahlungshärtbare Tintenstrahltinte umfasst weiterhin vorzugsweise wenigstens einen Photoinitiator, welcher in der strahlungshärtbaren Komponente gelöst oder als Feststoff vorliegen kann. Bei einer weiteren Ausführungsform kann die Tintenstrahltinte nicht in flüssiger Form, sondern in fester Form, beispielsweise als Wachsklötzchen, vorliegen und erst im Tintensystem geschmolzen werden. Unter Tintensystem wird hierbei die gesamte Versorgung des Tintenstahldruckers, wie Vorratsbehälter, Schläuche, Kanäle oder Ventile verstanden. Derartige schmelzbare Tintenstrahltinten werden als "phase change"-Tinte bezeichnet. In der zur Aufbringung der wenigstens einen Maskierung verwendbaren Tintenstrahltinte können als Farbmittel beispielsweise verschiedene schwarze Farbmittel, wie z.B. C.I. Solvent Blacks 27, 28, 29, 35, 45, C.I. Pigment Black 7; verschiedene blaue Farbmittel, wie z.B. C.I. Solvent Blues 25, 44, 48, 67, 70, C.I. Pigment Blue 15:3, verschiedene rote Farbmittel, wie z.B. C.I. Acid Red 60, C.I. Pigment Red 122 und/oder verschiedene gelbe Farbmittel, wie z.B. C.I. Acid Yellow 23, C.I. Direct Yellow 86, C.I. Direct Yellow 132, C.I. Disperse Yellow 119, C.I. Reactive Yellow 37, C.I. Solvent Yellow 162, C.I. Solvent Yellow 146, C.I. Pigment Yellow 17, C.I. Pigment Yellow 86, C.I. Pigment Yellow 155 verwendet werden. Als Additive kann die Tintenstrahltinte beispielsweise Dispergiermittel, Antiabsetzmittel, Feuchthaltemittel, Netzmittel, Biozide, pH-Einstellmittel, Weichmacher und/oder UV-Schutzmittel umfassen. Der ph-Wert der Tintenstrahltinte liegt hierbei für gewöhnlich zwischen 6 und 9, die Viskosität bei 30 bis 60 Pas für einen Bubble-Jet Drucker bzw. 30 bis 35 Pa s für einen Piezodrucker. Die Oberflächenspannung beträgt 1 bis 5 cP für einen Bubble-Jet Drucker und 10 bis 20 cP für einen Piezodrucker.

Die auf die wenigstens eine Maskierung aufzubringende zumindest eine Schicht ist eine erste Schicht, wobei zumindest eine zweite Schicht vor dem Schritt des Aufbringens der wenigstens einen Maskierung auf wenigstens eine Oberfläche des beschichteten oder unbeschichteten Brillenglases und nach dem Schritt des Entfernens der wenigstens einen Maskierung von dem Teilbereich derselben Oberfläche aufgebracht wird. Jegliche Schicht der eingangs genannten Art kann hierbei verwendet werden.

Gemäß einer weiteren Ausführungsform der vorliegenden Erfindung weist der Schritt des Entfernens der wenigstens einen Maskierung von dem Teilbereich wenigstens einer Oberfläche des beschichteten oder unbeschichteten Brillenglases ein Abwischen der Maskierung und/oder ein Eintauchen des beschichteten oder unbeschichteten Brillenglases in ein Lösungsmittel auf, wobei das Lösungsmittel vorzugsweise Aceton enthält. Das Abwischen kann beispielsweise mittels eines geeigneten Tuchs aus einem dem Fachmann bekannten geeigneten Material, bspw. Baumwolle, erfolgen. Alternativ kann das Entfernen durch Bürsten, bspw. mittels einer Bürstenwaschanlage, erfolgen. Alternativ oder zusätzlich zu dem Abwischen kann mittels eines vorzugsweise Aceton enthaltenden Lösungsmittels die Entfernung der wenigstens einen Maskierung von dem Teilbereich der Oberfläche des beschichteten oder unbeschichteten Brillenglases, einschließlich der auf der Maskierung vorliegenden Schicht, erfolgen. Als Lösungsmittel, das für die Entfernung wenigstens einer Maskierung geeignet ist, die durch ein Tintenstrahldruckverfahren erzeugt wird, kann beispielsweise Aceton, ein Gemisch von Wasser und Aceton oder ein Gemisch von Ethanol und Aceton verwendet werden. Bei vorstehend genannten Gemischen kann Aceton in einer Menge zwischen 10 und 70 Gew.-% enthalten sein, wobei der Rest entweder Wasser oder Ethanol ist. Es ist ebenso vorstellbar, Aceton oder Ethanol zu verwenden. Das Lösungsmittel wird derart gewählt, dass lediglich die wenigstens eine Maskierung angegriffen und samt der darauf aufgebrachten zumindest einen Schicht entfernt wird. Das beschichtete oder unbeschichtete Brillenglas sowie etwaig vorliegende weitere Schichten werden durch das Lösungsmittel vorzugsweise nicht angegriffen. Alternativ wird das Lösungsmittel selektiv auf den Teilbereich der wenigstens einen Oberfläche des beschichteten oder unbeschichteten Brillenglases aufgebracht, um die Maskierung dort zu entfernen. Auf diese Art kann beispielsweise sichergestellt werden, dass bei einem beschichteten oder unbeschichteten Brillenglas lediglich die zu entfernende Maskierung nebst darauf vorliegender zumindest einer Schicht jedoch nicht das Brillenglas bzw. weitere Schichten des Brillenglases mit dem Lösungsmittel in Kontakt gerät.

Die auf die wenigstens eine Maskierung aufzubringende zumindest eine Schicht weist im nicht sichtbaren Spektralbereich ein Reflexionsmaximum auf. Die Begriffe sichtbar bzw. nicht sichtbar betreffen hierbei den für das menschliche Auge sichtbaren bzw. nicht sichtbaren Spektralbereich, beispielsweise 400 nm bis 780 nm. Ein Reflexionsmaximum im sichtbaren Spektralbereich kann zur Erzeugung eines für eine dritte Person, d.h. eine das Brillenglas von der Vorderseite betrachtende Person, sichtbaren Reflexbildes herangezogen werden. Ein Reflexionsmaximum im nicht sichtbaren Spektralbereich wird zur Erzeugung eines nicht sichtbaren Reflexbildes herangezogen. Ein derartiges nicht sichtbares Reflexbild kann Informationen über das Brillenglas enthalten, bspw. kann es in Form eines 2D-Codes, vorzugsweise Data-Matrix-Codes, vorliegen. Die Auslesung des nicht sichtbaren Reflexbildes wird durch das (gewählte) Relexionsmaximum bedingt und kann mittels Reflexionsmessung im entsprechenden Wellenlängenbereich visualisiert und ausgewertet werden.

Gemäß einer weiteren Ausführungsform der vorliegenden Erfindung ist das beschichtete oder unbeschichtete Brillenglas ein Linsenrohling, ein Brillenglas-Halbfertigprodukt oder ein fertiges Brillenglas. Wie vorstehend aufgeführt handelt es sich bei dem Linsenrohling um ein üblicherweise vorgeformtes Materialstück zur Herstellung eines Brillenglases in irgendeinem Zustand vor der Beendigung der Oberflächenbearbei-Oberflächenbearbeitung. Ein Brillenglas-Halbfertigprodukt betrifft einen Linsenrohling mit nur einer optisch fertig bearbeiteten Fläche, wohingegen das fertige Brillenglas zwei fertig bearbeitete optische Flächen aufweist, vor oder nach der Randbearbeitung.

Gemäß einer weiteren Ausführungsform der vorliegenden Erfindung beträgt der Anteil des mit wenigstens einer Maskierung und/oder mit wenigstens einem Reflexbild versehenen Teilbereichs wenigstens einer Oberfläche des beschichteten oder unbeschichteten Brillenglases 0,05 % bis 17 %, bevorzugt 0,1 % bis 14 %, besonders bevorzugt 0,3 % bis 9 % und ganz besonders bevorzugt 0,5 % bis 4 %, jeweils bezogen auf die gesamte mit wenigstens einer Maskierung versehene bzw. mit wenigstens einem Reflexbild versehene wenigstens eine Oberfläche des fertigen, formgerandeten Brillenglases. Beispielsweise kann der Anteil des mit wenigstens einer Maskierung und/oder mit wenigstens einem Reflexbild versehenen Teilbereichs wenigstens einer Oberfläche zwischen 20 % und 1 % oder zwischen 10 % und 1,5 % oder zwischen 5 % und 2 % oder zwischen 3 % und 2 % betragen, jeweils bezogen auf die gesamte mit wenigstens einer Maskierung versehene bzw. mit wenigstens einem Reflexbild versehene wenigstens eine Oberfläche des fertigen, formgerandeten Brillenglases. Durch die wenigstens eine Maskierung eines vergleichsweise geringen Anteils der wenigstens einen Oberfläche von 20 % oder weniger, bezogen auf die gesamte mit wenigstens einer Maskierung versehene bzw. mit wenigstens einem Reflexbild versehene wenigstens eine Oberfläche des fertigen, formgerandeten Brillenglases, wird sichergestellt, dass für den größten Teil der wenigstens einen Oberfläche des beschichteten oder unbeschichteten Brillenglases eine gewünschte Beschichtung und somit die gewünschte Funktionalität und kein Reflexbild vorliegt. Vorstehend genannte Werte gelten für die gesamte mit wenigstens einer Maskierung versehene bzw. mit wenigstens einem Reflexbild versehene wenigstens eine Oberfläche des fertigen, formgerandeten Brillenglases, unabhängig davon, ob nur die Vorderfläche oder nur die Rückfläche oder die Vorderfläche und die Rückfläche mit wenigstens einer Maskierung und/oder mit wenigstens einem Reflexbild versehen ist. Beispielsweise kann als Reflexbild ein Muster, bspw. ein Logo, einer Größe von 0,3 cm x 1,0 cm auf wenigstens eine Oberfläche eines beschichteten oder unbeschichteten Brillenglases einer Größe von 3 cm x 5 cm aufgebracht werden. Dieses Reflexbild liegt dann bevorzugt auf wenigstens einer Oberfläche des Brillenglases, aber nicht innerhalb eines Kreises mit einem Radius von wenigstens 7 mm, weiter bevorzugt von wenigstens 11 mm, besonders bevorzugt von wenigstens 13 mm und ganz besonders bevorzugt von wenigstens 19 mm um den Ferndurchblickpunkt eines Einstärkenbrillenglases bzw. um den Prismenbezugspunkt eines Mehrstärkenbrillenglases/Gleitsichtbrillenglases.

Gemäß einer bevorzugten Ausführungsform der vorliegenden Erfindung wird die wenigstens eine Maskierung auf wenigstens einer Oberfläche des beschichteten oder unbeschichteten Brillenglases mittels eines Matrixdruckverfahrens aufgebracht, wobei die wenigstens eine Maskierung nicht innerhalb eines Kreises mit einem Radius von wenigstens 6 mm, weiter bevorzugt von wenigstens 9 mm, besonders bevorzugt von wenigstens 12 mm und ganz besonders bevorzugt von wenigstens 16 mm um den Ferndurchblickpunkt eines Einstärkenbrillenglases bzw. um den Prismenbezugspunkt eines Mehrstärkenbrillenglases/Gleitsichtbrillenglases auf wenigstens einer Oberfläche des beschichteten oder unbeschichteten Brillenglases aufgebracht wird. Mithin befindet sich gemäß dieser bevorzugten Ausführungsform kein Reflexbild innerhalb eines Kreises mit vorstehend genanntem Radius, unabhängig davon, ob wenigstens ein Reflexbild auf der Vorderfläche oder auf der Rückfläche oder auf der Vorderfläche und auf der Rückfläche eines beschichteten oder unbeschichteten Brillenglases gemäß dem erfindungsgemäßen Verfahren erzeugt wurde.

Gemäß einer weiteren Ausführungsform der vorliegenden Erfindung liegt der mit wenigstens einer Maskierung und/oder mit wenigstens einem Reflexbild versehene Teilbereich wenigstens einer Oberfläche des beschichteten oder unbeschichteten Brillenglases in einem umlaufenden Randbereich derselben Oberfläche vor, wobei ein Anteil des umlaufenden Randbereichs der wenigstens einen Oberfläche vorzugsweise 20 % bis 30 %, beträgt, bezogen auf die gesamte mit wenigstens einer Maskierung bzw. mit wenigstens einem Reflexbild versehene wenigstens eine Oberfläche des fertigen, formgerandeten Brillenglases. Beispielsweise beträgt der Anteil des umlaufenden Randbereichs der wenigstens einen Oberfläche 10 % oder 15 % oder 20 % bis 30 %, jeweils bezogen auf die gesamte mit wenigstens einer Maskierung bzw. mit wenigstens einem Reflexbild versehene wenigstens eine Oberfläche des fertigen, formgerandeten Brillenglases. Der Randbereich ist derart gewählt, dass der Randbereich in einem konstanten Abstand zur Begrenzung der wenigstens einen Oberfläche liegt. Durch die Beschränkung der wenigstens einen Maskierung bzw. des wenigstens einen Reflexbildes auf den Randbereich wenigstens einer Oberfläche kann sichergestellt werden, dass lediglich unkritische Bereiche dieser wenigstens einen Oberfläche, d.h. Bereiche, die den Benutzer des Brillenglases nicht stören, die Reflexwirkung aufweisen. Vorstehend genannte Werte gelten jeweils für die Vorderfläche oder für die Rückfläche eines beschichteten oder unbeschichteten Brillenglases. Für den Fall, dass sowohl die Vorderfläche als auch die Rückfläche des beschichteten oder unbeschichteten Brillenglases im Randbereich wenigstens eine Maskierung und/oder wenigstens ein Reflexbild aufweisen, beziehen sich vorstehende Werte separat auf die Vorderfläche und auf die Rückfläche.

Gemäß einer weiteren Ausführungsform der vorliegenden Erfindung weist der mit wenigstens einer Maskierung und/oder mit wenigstens einem Reflexbild versehene Teilbereich der wenigstens einen Oberfläche eines beschichteten oder unbeschichteten Brillenglases die Form eines Musters, vorzugsweise eines Logos oder eines Buchstabens, oder eines Negativs des Logos oder des Buchstabens auf. Ein Logo ist hierbei als ein grafisches Zeichen bzw. Signet zu verstehen, das ein bestimmtes Subjekt, wie beispielsweise ein Unternehmen, eine Organisation, eine Privatperson oder ein Produkt repräsentiert. Das Logo kann hierbei aus einem oder mehreren Buchstaben oder aus einer Kombination von Buchstaben und Bildelementen bestehen. Das Muster kann ebenfalls dazu dienen, das beschichtete oder unbeschichtete Brillenglas kennzeichnende Eigenschaften abzubilden. Das Muster kann beispielsweise das Brillenglas betreffende Informationen in Form eines 2D-Codes, vorzugsweise Data-Matrix-Codes, oder eines Teils davon wiedergeben. Der 2D-Code, vorzugsweise Data-Matrix-Code bzw. das Signierzeichen weist im Vergleich zu dem Brillenglas geringe Abmessungen von beispielsweise 5 mm auf 5 mm oder weniger auf. Das Signierzeichen ist nicht notwendigerweise quadratisch, sondern kann jegliche andere Form aufweisen, wie beispielsweise rund, rechteckig oder dreieckig. Der Data-Matrix-Code ist gemäß der Norm DIN EN ISO 8980-2, Abschnitt 7.1 für Gleitsichtbrillengläser ausgeführt, nämlich als dauerhafte Kennzeichnung, die mindestens mit den folgenden Angaben dauerhaft gekennzeichnet ist:
a) Markierung zur Ausrichtung; diese muss mindestens aus zwei Markierungen in einem Abstand von 34 mm bestehen und symmetrisch zu einer vertikalen Ebene durch den Anpasspunkt oder den Prismenbezugspunkt angeordnet sein;
b) Angabe zur Nahzusatzwirkung, in Dioptrien;
c) Angabe des Herstellers oder Lieferanten oder des Handelsnamens oder Warenzeichens.

Der Data-Matrix-Code kann des Weiteren eine Größe von 2 mm auf 2 mm aufweisen und ist dabei für gewöhnlich aus 16 x 16 Punkten aufgebaut. Das Erfordernis der dauerhaften Kennzeichnung wird hierbei dadurch sichergestellt, dass es sich bei der in dem erfindungsgemäßen Verfahren auf der wenigstens einen Maskierung aufgebrachten zumindest einen Schicht um eine permanent aufgebrachte Schicht handelt. Die permanente Aufbringung der zumindest einen Schicht kann durch die Wahl eines geeigneten Materials erfolgen. Alternativ kann nach Fertigstellung der zumindest einen Schicht diese mit einer oder mehreren weiteren Schichten bedeckt werden, die eine Schutzfunktion ausüben. Die Detektion des Signierzeichens bzw. des Data-Matrix-Codes kann durch Bestimmung des geänderten Lichttransmissionsgrades des Brillenglases erfolgen. In diesem Zusammenhang ist es ebenso vorstellbar, eine Änderung des Lichttransmissionsgrades im nicht sichtbaren Bereich, beispielsweise im UV-Bereich, bereitzustellen. Dadurch stört das durch das erfindungsgemäße Verfahren aufgebrachte Signierzeichen bzw. der durch das erfindungsgemäße Verfahren erzeugte Data-Matrix-Code innerhalb oder auf der wenigstens einen Entspiegelungsschicht nicht die Entspiegelungseigenschaften des Brillenglases im Bereich des sichtbaren Lichts und ist mit bloßem Auge nicht zu erkennen.

Gemäß einer weiteren Ausführungsform der vorliegenden Erfindung beträgt eine Auflösung der Grenzlinie 118 Pixel/cm oder mehr, vorzugsweise 236 Pixel/cm oder mehr. Durch Auswahl geeigneter Auflösung der Grenzlinie kann beispielsweise eine scharfe Abbildung des Reflexbildes, vorzugsweise eines Musters oder eines Signierzeichens, sichergestellt werden. Vorzugsweise kommen hierzu hochauflösende Matrixdruckverfahren zum Einsatz, die eine Auflösung der Grenzlinie von 400 Pixel/cm oder mehr, wie beispielsweise 500 Pixel/cm, 600 Pixel/cm, 700 Pixel/cm, oder 800 Pixel/cm aufweisen.

Bei einer bevorzugten Ausführungsform der Erfindung umfasst eine Entspiegelungsschicht mehrere Schichten.

Bei einer Ausführungsform der Erfindung weist die Entspiegelungsschicht nur eine einzige Schicht auf. Bei dieser Ausführungsform umfasst die einzige Schicht der Entspiegelungsschicht wenigstens ein Metalloxid, Metallhydroxid und/oder Metalloxidhydrat von Silizium.

Im Rahmen dieser Erfindung werden die Begriffe Schicht und Beschichtung austauschbar verwendet.

Bei einer Ausführungsform der Erfindung kann das erfindungsgemäße Verfahren für Brillengläser ohne nominelle dioptrische Wirkung und Korrektions-Brillengläsern, also Brillengläsern mit dioptrischer Wirkung, verwendet werden. Dioptrische Wirkung ist nach der DIN EN ISO 13666 der Sammelbegriff für die fokussierende und die prismatische Wirkung eines Brillenglases. Das Brillenglas kann hierbei auf organischen Materialien oder auf mineralischem Glas basieren. Ein Brillenglas basierend auf organischen Materialien wird auch als Kunststoffbrillenglas bezeichnet. Das Brillenglas kann weiterhin eingefärbt oder nicht eingefärbt sein.

Bei einer Ausführungsform der Erfindung wird die wenigstens eine Maskierung auf ein beschichtetes Brillenglas aufgebracht. Bei dieser Ausführungsform handelt es sich bei der Beschichtung um eine Hartbeschichtung und/oder um eine Schicht der Entspiegelungsschicht. Nach Aufbringen der Maskierung wird zumindest eine weitere Schicht der Entspiegelungsschicht, bevorzugt zwei bis neun Schichten der Entspiegelungsschicht, besonders bevorzugt vier bis sieben Schichten der Entspiegelungsschicht, auf der wenigstens einen Maskierung und auf dem Teilbereich derselben wenigstens einen Oberfläche des beschichteten oder unbeschichteten Brillenglases aufgebracht. Nach Entfernen der wenigstens einen Maskierung und der sich auf der Maskierung befindlichen zumindest einen Schicht wird ein Brillenglas erhalten, welches wenigstens ein Reflexbild umfasst. Optional kann diese wenigstens eine Oberfläche eines beschichteten oder unbeschichteten Brillenglases mit wenigstens einer weiteren Schicht einer Entspiegelungsschicht und/oder mit wenigstens einer Antibeschlagschicht und/oder mit wenigstens einer Clean-Coat-Schicht versehen werden.

Bei einer Ausführungsform der Erfindung kann wenigstens eine elektrisch leitfähige Schicht auf die mit wenigstens einer Maskierung versehene Oberfläche eines beschichteten oder unbeschichteten Brillenglases aufgebracht werden. Nach Entfernen der wenigstens einen Maskierung sowie der darauf vorliegenden wenigstens einen elektrisch leitfähigen Schicht sowie gegebenenfalls der Aufbringung weiterer Schichten wird ein Brillenglas erhalten, welches ein Reflexbild und/oder eine, in Abhängigkeit von der verwendeten Maskierung, strukturierte elektrisch leitfähige Schicht umfassen kann. Diese strukturierte elektrisch leitfähige Schicht kann als Leiterbahn zur Stromversorgung weiterer Komponenten einer Brille ausgebildet sein.

Weitere Vorteile ergeben sich aus der Beschreibung und den beigefügten Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: ein Flussdiagramm von Verfahrensschritten eines Verfahrens zur Erzeugung einer Beschichtung auf einer Oberfläche eines unbeschichteten oder beschichteten Brillenglases;
- Fig. 2: ein Flussdiagramm von Verfahrensschritten eines alternativen Verfahrens zur Erzeugung einer Beschichtung auf einer Oberfläche eines beschichteten oder unbeschichteten Brillenglases;
- Fig. 3: ein unbeschichtetes Brillenglas mit Maskierung und einer darüber aufgebrachten Schicht;
- Fig. 4: ein unbeschichtetes Brillenglas mit einer ersten die Oberfläche teilweise bedeckenden Schicht und einer zweiten die Oberfläche vollständig bedeckenden Schicht;
- Fig. 5: ein unbeschichtetes Brillenglas mit Maskierung;
- Fig. 6: ein beschichtetes Brillenglas mit Maskierung;
- Fig. 7: ein beschichtetes Brillenglas mit einem mit einer Maskierung versehenen Teilbereich und Beschichtung;
- Fig. 8: ein beschichtetes Brillenglas mit einer auf Teilen einer Oberfläche aufgebrachten Schicht;
- Fig. 9A und B: ein rohrundes Brillenglas mit einer darauf aufgebrachten Maskierung sowie das Negativ davon;
- Fig. 10 A und B: ein rohrundes Brillenglas mit darauf aufgebrachter Maskierung und eine Vergrößerung der Maskierung;
- Fig. 11: ein beschichtetes Brillenglas mit einer auf einem Teilbereich der Oberfläche vorliegenden ersten Schicht und zwei darauf vorliegenden die gesamte Oberfläche bedeckenden weiteren Schichten;
- Fig. 12: eine Abrisskante bzw. Grenzlinie einer mittels Tintenstahldruck hergestellten Maskierung in 50-facher lichtmikroskopischer Vergrößerung; und
- Fig. 13: eine Aufsicht auf eine Brille mit auf den Brillengläsern vorliegendem Reflexbild.

Im Folgenden handelt es sich bei dem Brillenglas 10 um ein Brillenglas-Halbfertigprodukt oder um ein fertiges Brillenglas vor oder nach der Randbearbeitung.

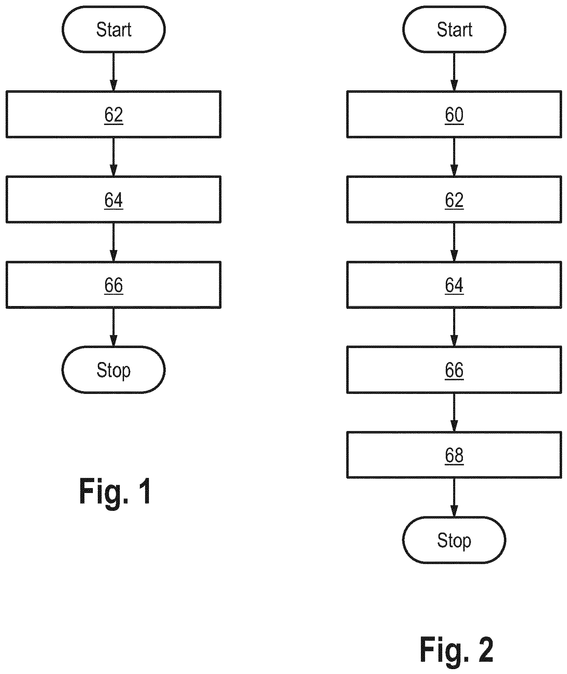

Die Fig. 1 zeigt ein Flussdiagramm eines Verfahrens zur Erzeugung einer Beschichtung auf einer Oberfläche 14 eines beschichteten oder unbeschichteten Brillenglases 10. In einem ersten Schritt 62 erfolgt die wenigstens eine Maskierung wenigstens eines Teilbereichs wenigstens einer Oberfläche des beschichteten oder unbeschichteten Brillenglases durch ein herkömmliches Tintenstrahldruckverfahren. In Schritt 64 wird eine Schicht auf die wenigstens eine Maskierung sowie auf den nicht mit wenigstens einer Maskierung versehenen Teilbereich derselben Oberfläche des beschichteten oder unbeschichteten Brillenglases 10 derartig aufgebracht, dass die gesamte Oberfläche bedeckt ist. In einem weiteren Schritt 66 erfolgt die Entfernung der als wenigstens eine Maskierung aufgebrachten Tintenstrahltinte von dem Teilbereich der Oberfläche durch Immersion in Aceton, gefolgt von Abwischen mit einem Baumwolltuch und erneutem Abwischen durch mit einem mit Aceton getränkten Baumwolltuch. Dadurch wird sichergestellt, dass die in Schritt 64 aufgebrachte Schicht lediglich auf den nicht maskierten Teilbereichen dieser Oberfläche des beschichteten oder unbeschichteten Brillenglases 10 vorliegt. Mithin weist das dadurch erhaltene Brillenglas 10 einen verschiedenen Lichttransmissionsgrad und Reflexionsgrad über die in den Schritten 62 bis 66 bearbeitete Oberfläche des Brillenglases 10 auf.

Fig. 2 zeigt ein weiteres Flussdiagramm eines Verfahrens zur Erzeugung einer Beschichtung auf einer Oberfläche 14 eines beschichteten oder unbeschichteten Brillenglases 10. In einem ersten Schritt 60 wird eine Hartbeschichtung auf wenigstens eine Oberfläche des Brillenglases 10 aufgebracht. Die daraufhin folgenden Schritte 62, 64 und 66 entsprechen den vorstehend, unter Bezug auf Fig. 1 genannten Schritten 62, 64 und 66. In einem weiteren Schritt 68 wird anschließend eine weitere, dieselbe Oberfläche vollständig bedeckende Schicht auf die erste, diese Oberfläche des Brillenglases 10 lediglich teilweise bedeckende, Schicht aufgebracht. Die weitere und die erste Schicht sind vorzugsweise Bestandteil einer Entspiegelungsschicht. Die erste Schicht weist hierbei ein Reflexionsmaximum im sichtbaren Spektralbereich auf, das von dem Reflexionsmaximum der weiteren Schicht verschieden ist, das ebenfalls im sichtbaren Spektralbereich vorliegt. Mithin wird ein Reflexbild erzeugt, das durch die zwei verschiedenen Reflexionsmaxima im sichtbaren Bereich bestimmt ist.

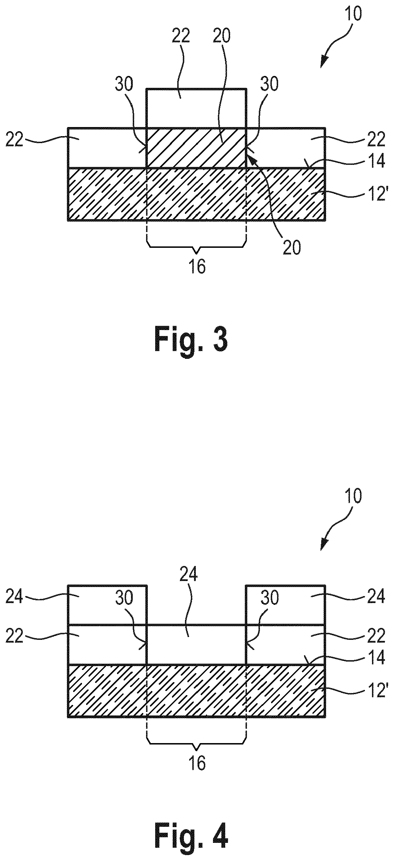

Fig. 3 zeigt ein Brillenglas 10, das durch das erfindungsgemäße Verfahren modifiziert wird. Die Oberfläche 14 eines unbeschichteten Brillenglases 12' weist hierbei eine Maskierung 20 eines Teilbereichs 16 der Oberfläche 14 auf. An der Grenzlinie 30 steht die Maskierung 20 in Kontakt mit der Schicht 22, beispielsweise einer Entspiegelungsschicht oder einer der Schichten einer Entspiegelungsschicht, die die gesamte Oberfläche 14 und die Maskierung 20 im Rahmen des Teilbereichs 16 bedeckt.

Die Fig. 4 zeigt das unbeschichtete Brillenglas 10 gemäß der Fig. 3, nachdem die Maskierung 20 und die auf der Maskierung vorhandene Schicht 22 mittels Abwischen durch ein mit Aceton getränktes Baumwolltuch und anschließendes Abwaschen mit Aceton entfernt wurde und eine weitere Schicht 24 auf die Oberfläche der Schicht 22 bzw. im Bereich 16 auf der Oberfläche 14 des unbeschichteten Brillenglases 12' aufgebracht ist. Bei der Schicht 22 handelt es sich um eine erste Schicht einer Entspiegelungsschicht und bei der Schicht 24 um eine zweite Schicht einer Entspiegelungsschicht. Beide Schichten weisen verschiedene Reflexionsmaxima im Bereich des sichtbaren Lichts auf, so dass sich ein Reflexionsbild gemäß der Reflexionseigenschaften der zweiten Schicht 24 im maskierten Teilbereich 16 der Oberfläche 14 ergibt. Für den unbeschichteten Teilbereich 14 der Oberfläche hingegen ergibt sich die Reflexion aus den Eigenschaften beider Schichten 22 und 24.

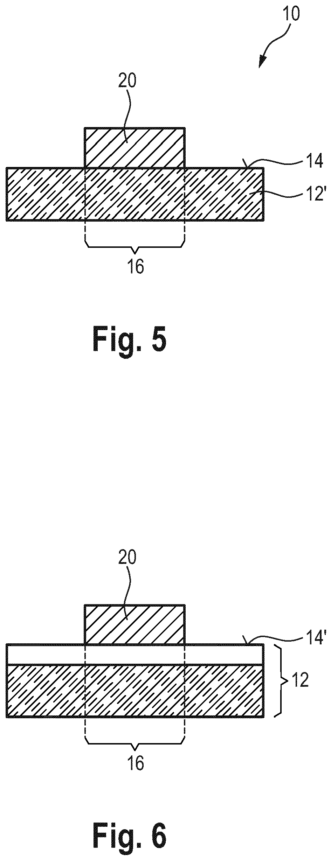

Die Fig. 5 zeigt ein Brillenglas 10. Eine durch ein Tintenstrahldruckverfahren erzeugte Maskierung 20 liegt auf einem Teilbereich 16 der Oberfläche 14 eines unbeschichteten Brillenglases 12' vor.

Die Fig. 6 zeigt ein Brillenglas 10 mit einer durch ein Tintenstrahldruckverfahren erzeugten Maskierung 20 auf einem Teilbereich 16 der Oberfläche 14' eines beschichteten Brillenglases 12.

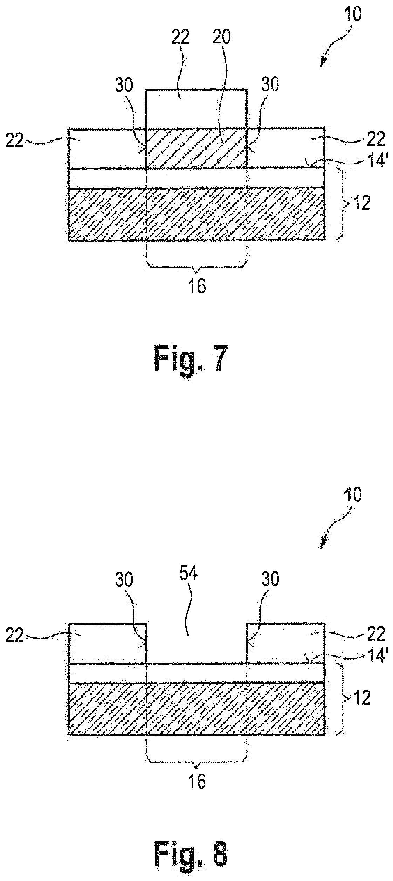

Die Fig. 7 zeigt ein Brillenglas 10 mit einer durch ein Tintenstrahldruckverfahren erzeugten Maskierung 20 auf einem Teilbereich 16 der Oberfläche 14' eines beschichteten Brillenglases 12. Bei der Beschichtung des beschichteten Brillenglases 12 handelt es sich um eine Verspiegelungsschicht. Auf dem maskiertem Teilbereich 20 und auf der Oberfläche 14' liegt eine Beschichtung 22 vor, die ebenfalls als Verspiegelungsschicht, ausgebildet ist. Beide Verspiegelungschichten weisen unterschiedliche Schichtdicken auf, wodurch unterschiedliche Reflexfarben erhalten werden. An der Grenzlinie 30 steht die Maskierung 20 in Kontakt mit der Schicht 22.

Die Fig. 8 zeigt ein Brillenglas 10, das durch Entfernen der Maskierung 20, die durch das Tintenstrahldruckverfahren aufgebracht wurde, von dem beschichteten Brillenglas 12 aus Fig. 7 erhalten wird. Zusammen mit der Tintenstrahltinte wird ebenso der Anteil der darauf vorliegenden Beschichtung 22 entfernt. Mithin weist das Brillenglas 10 die Schicht 22 lediglich auf den unmaskiertem Bereich der Oberfläche 14' des beschichteten Brillenglases 12 auf, wohingegen der vormals maskierte Bereich 54 keine Schicht 22 aufweist. Mithilfe eines Lichtmikroskops kann gezeigt werden, dass die Grenzlinie 30 die entsprechende Pixelstruktur und entsprechende Auflösung des verwendeten Tintenstrahldruckverfahrens aufweist.

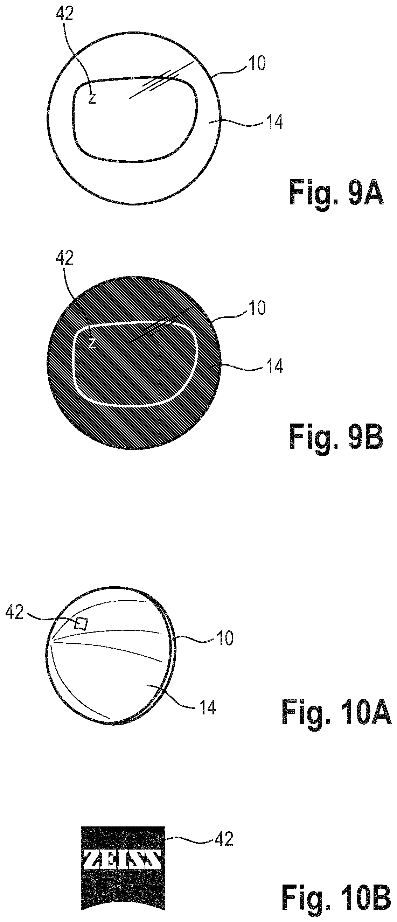

Fig. 9A zeigt ein Beispiel eines erfindungsgemäßen rohrunden Brillenglases 10 mit einer Oberfläche 14. Eine Maskierung 42 ist mit einem Tintenstrahldruckverfahren auf der Oberfläche 14 des Brillenglases 10 vorgesehen.

Fig. 9B zeigt das Brillenglas 10 nach Abwischen der Tinte samt der darauf abgelagerten Schicht 22. Zurück bleibt ein nur im Restreflex sichtbares Negativ der aufgedruckten Maskierung.

Fig. 10A zeigt die Oberfläche 14 eines erfindungsgemäßen rohrunden Brillenglases 10. Der maskierte Teilbereich 16 liegt in Form eines Musters 42 vor. Die Vergrößerung des Musters 42 wird in Fig. 10B gezeigt und weist im vorliegenden Fall das Firmenlogo der Anmelderin auf.

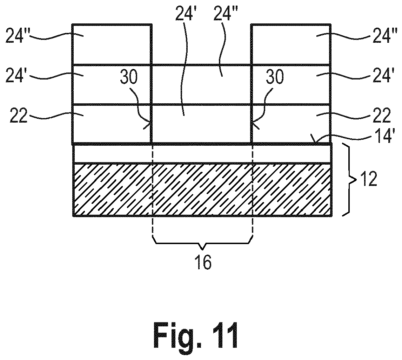

Die Fig. 11 zeigt ein beschichtetes Brillenglas 12 mit einer auf einem Teilbereich der Oberfläche vorliegenden ersten Schicht 22 und zwei darauf vorliegenden die gesamte Oberfläche bedeckenden weiteren Schichten 24', 24". Die erste Schicht 22 wurde nach dem erfindungsgemäßen Verfahren erzeugt und liegt mithin nicht im Teilbereich 16 vor. Die Schicht 24' bedeckt hingegen die Schicht 22 und die Oberfläche 14' im Teilbereich 16. Die Schicht 22 stößt damit an der Grenzlinie 30 an die Schicht 22'. Die Schicht 24" bedeckt die Schicht 24' vollständig.

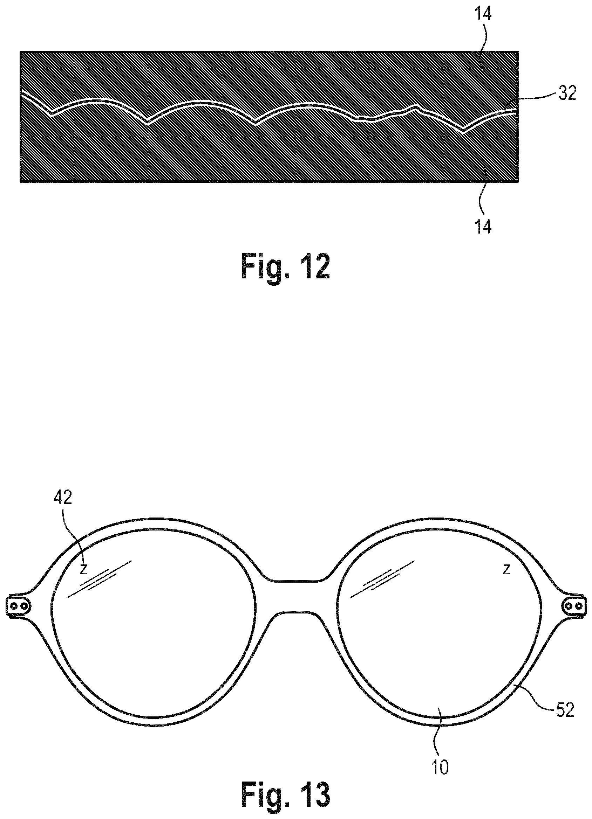

Die Fig. 12 zeigt die durch ein Tintenstrahldruckverfahren erzeugte Abrisskante bzw. Grenzlinie 30 in 50-facher lichtmikroskopischer Vergrößerung. Deutlich sichtbar ist die Pixelgröße des Druckers von 177.17 px/cm (etwa 450 dpi). Die Abrisskante bzw. Grenzlinie erscheint scharf. Die Auflösung ist damit ausreichend, um bspw. einen Data-Matrix-Code gemäß DIN EN ISO 8980-2, Abschnitt 7.1 für Gleitsichtbrillengläser abzubilden.

Die Fig. 13 zeigt die Aufsicht einer Brille mit Rahmen 52. Die Brillengläser 10 sind in dem Rahmen 52 eingefasst und weisen jeweils ein Muster 42 auf, das in Form eines Reflexbildes wahrgenommen werden kann.

Zusammenfassend kann mit den hierin vorgeschlagenen Lösungen ein hochaufgelöstes Reflexbild im sichtbaren als auch nicht sichtbaren Spektralbereich erzeugt werden. Dieses Reflexbild kann Informationen in Form eines Musters oder eines Signierzeichens aufweisen. Das erfindungsgemäße Verfahren stellt eine Alternative zur Lasermarkierung dar und stellt zusätzliche Individualisierungsparameter breit.

Im Folgenden wird die Erfindung durch einige Beispiele näher erläutert, welche die Erfindung jedoch nicht beschränken.

### I Herstellung der erfindungsgemäßen Brillengläser nach dem erfindungsgemäßen Verfahren

Beispiele 1 bis 5: Erfindungsgemäßes Verfahren unter Verwendung einer Entspiegelungsschicht

Ein Brillenglas-Halbfabrikat basierend auf Polythiourethan (MR 8, Firma Mitsui Chemicals, Inc) mit einem mittleren Brechungsindex von 1,598 wurde per Dip-Coating mit einer Hartschicht versehen. Auf die Vorderfläche des so beschichteten Brillenglas-Halbfabrikats wurde mit dem Tintenstrahldrucker X-Cube 01 der Firma Tecoptique jeweils gemäß nachstehender Tabelle 1 wenigstens eine Maskierung aufgebracht. Als Tintenstrahltinte wurde YWE (Yellow) der Firma Tecoptique eingesetzt. Das so maskierten Brillenglas-Halbfabrikat wurde in dem Box-Coater Syrus III der Bühler Leybold Optics GmbH mit einer Entspiegelungsschicht aus sechs alternierenden Schichten aus ZrO und SiO2 versehen, beginnend mit ZrO direkt auf der Hartschicht. Die Maskierung des fertig beschichteten Brillenglas-Halbfabrikats wurde durch manuelle Politur mit einem in Aceton-getränkten Baumwolltuch entfernt und so die darunter befindliche Hartschicht wieder freigelegt. Das so gefertigte Brillenglas-Halbfabrikat zeigte jeweils ein im Prüflicht unter geeigneten Winkeln deutlich sichtbares, scharf umrissenes Reflexbild, welches ein exaktes Negativ der zuvor aufgebrachten Maskierung darstellt. Zur Erzielung der dioptrischen Wirkung wurde jeweils die Rückfläche des Brillenglas-Halbfabrikats mechanisch bearbeitet.

**Tabelle 1:**

| Beispiel | Maskierung | Position (in Bezug auf Ferndurchblickpunkt) | Dioptrische Wirkung | Grundkurve |
|---|---|---|---|---|
| 1 | ZEISS Schriftzug (3x10 mm) | temporal | Sphärisch -2,0 Dioptrien | 4,0 Dioptrien |
| 2 | ZEISS Schriftzug (3x10 mm) | zentral | Sphärisch -2,0 Dioptrien | 4,0 Dioptrien |
| 3a | ZEISS Schriftzug (3x10 mm) | temporal | Sphärisch -3,48 Dioptrien, Zylinder -0,76 Dioptrien, Achse 148° | 3,0 Dioptrien |
| 3b | ZEISS Schriftzug (3x10 mm) | temporal | Sphärisch -1,22 Dioptrien, Zylinder -0,66 Dioptrien, Achse 123° | 4,0 Dioptrien |
| 4 | ZEISS Warenzeichen (20x20mm) | zentral | Sphärisch -2,0 Dioptrien | 4,0 Dioptrien |
| 5a | ZEISS Warenzeichen (20x20mm) | zentral | Sphärisch -3,48 Dioptrien, Zylinder -0,76 Dioptrien, Achse 148° | 3,0 Dioptrien |
| 5b | ZEISS Warenzeichen (20x20mm) | zentral | Sphärisch -1,22 Dioptrien, Zylinder -0,66 Dioptrien, Achse 123° | 4,0 Dioptrien |

### Vergleichsbeispiel 1:

Das Brillenglas-Halbfabrikat aus Vergleichsbeispiel 1 ist identisch dem Brillenglas-Halbfabrikat aus Beispiel 1, außer dass das Brillenglas-Halbfabrikat aus Vergleichsbeispiel 1 nicht mit wenigstens einer Maskierung versehen wurde.

Beispiele 6 bis 10: Erfindungsgemäßes Verfahren unter Verwendung einer Verspiegelungsschicht

Ein Brillenglas-Halbfabrikat basierend auf Polythiourethan (MR 8, Firma Mitsui Chemicals, Inc) mit einem mittleren Brechungsindex von 1,598 wurde per Dip-Coating mit einer Hartschicht beschichtet. Auf die Vorderfläche des so erhaltenen Brillenglas-Halbfabrikats wurde in dem Box-Coater Syrus III der Bühler Leybold Optics GmbH eine Schicht Chrom mit einer Schichtdicke von 18 nm aufgebracht. Auf die so verspiegelte Vorderfläche des Brillenglas-Halbfabrikats wurde mit dem Tintenstrahldrucker X-Cube 01 der Firma Tecoptique jeweils gemäß nachstehender Tabelle 2 wenigstens eine Maskierung aufgebracht. Als Tintenstrahltinte wurde YWE (Yellow) der Firma Tecoptique eingesetzt. Das so maskierte Brillenglas-Halbfabrikat wurde in einem erneuten PVD-Beschichtungsschritt mit einer Schicht SiO2 mit einer Schichtdicke von 55 nm versehen. Die Maskierung der fertig beschichteten Brillenglas-Halbfabrikate wurde durch manuelle Politur mit einem in Aceton getränkten Baumwolltuch entfernt und so die darunter befindliche Chromschicht wieder freigelegt. Das so gefertigte Brillenglas-Halbfabrikat zeigte jeweils ein ästhetisch anspruchsvolles silbernes Reflexbild auf einer ansonsten bronzefarbenen Verspiegelung.

**Tabelle 2:**

| Beispiel | Maskierung | Position (in Bezug auf Ferndurchblickpunkt) | Dioptrische Wirkung | Grundkurve |
|---|---|---|---|---|
| 6 | ZEISS Schriftzug (3x10 mm) | temporal | Sphärisch -2,0 Dioptrien | 4 Dioptrien |
| 7 | ZEISS Schriftzug (3x10 mm) | zentral | Sphärisch -2,0 Dioptrien | 4 Dioptrien |
| 8a | ZEISS Schriftzug (3x10 mm) | temporal | Sphärisch -3,48 Dioptrien, Zylinder -0,76 Dioptrien, Achse 148° | 3,0 Dioptrien |
| 8b | ZEISS Schriftzug (3x10 mm) | temporal | Sphärisch -1,22 Dioptrien, Zylinder -0,66 Dioptrien, Achse 123° | 4,0 Dioptrien |
| 9 | ZEISS Warenzeichen (20x20mm) | zentral | Sphärisch -2,0 Dioptrien | 4 Dioptrien |
| 10a | ZEISS Warenzeichen (20x20mm) | zentral | Sphärisch -3,48 Dioptrien, Zylinder -0,76 Dioptrien, Achse 148° | 3,0 Dioptrien |
| 10b | ZEISS Warenzeichen (20x20mm) | zentral | Sphärisch -1,22 Dioptrien, Zylinder -0,66 Dioptrien, Achse 123° | 4,0 Dioptrien |

### II Charakterisierung der nach dem erfindungsgemäßen Verfahren hergestellten Brillengläser

### IIa Lichtmikroskopische Untersuchung

Bei lichtmikroskopischer Untersuchung (50-fache Vergrößerung) zeigte sich in den Brillenglas-Halbfabrikaten der Beispiele 1 bis 10 eine klare Grenzlinie zwischen dem Teilbereich der Oberfläche, welche mit der wieder entfernten Maskierung und welche ohne Maskierung versehen war. Die einzelnen Bildpunkte der mittels Tintenstrahltinte aufgebrachten Maskierung waren in den lichtmikroskopischen Aufnahmen deutlich sichtbar erkennbar.

### IIb Bewitterungstest

Die Brillenglas-Halbfabrikate der Beispiele 2 und 4 sowie das Brillenglas-Halbfabrikat gemäß Vergleichsbeispiel 1 wurden jeweils in einer Trommel, gefüllt mit Sand, Schmirgelpapierstückchen und Filz bei 120rpm mechanisch vorgeschädigt und anschließend einem beschleunigten Bewitterungstest (Prüfgerät: QUV-accelerated weathering test unit mit UVA 340 Lichtquelle, Q-Lab Deutschland GmbH) mit 24 Expositionszyklen ausgesetzt. Eine visuelle Kontrolle auf mechanische Schädigung der Entspiegelungsschicht mittels lichtmikroskopischer Aufnahmen in 10-facher Vergrößerung ließ keine erkennbaren Unterschiede zwischen den Brillenglas-Halbfabrikaten der Beispiele und dem entsprechenden Brillenglas-Halbfabrikat des Vergleichsbeispiels erkennen.

### IIc Kochtest

Die Brillenglas-Halbfabrikate der Beispiele 2 und 4 sowie die Brillenglas-Halbfabrikate gemäß Vergleichsbeispiel 1 wurden für drei Stunden in kochendes, vollentsalztes Wasser gegeben. Eine visuelle Beurteilung nach anschließender Trocknung ließ keine Delamination der Entspiegelungsschicht auf den Brillenglas-Halbfabrikaten der Beispiele erkennen.

### IId Politurtest

Die Brillenglas-Halbfabrikate der Beispiele 2 und 4 sowie das Brillenglas-Halbfabrikat gemäß Vergleichsbeispiel 1 wurden mit einem in Aceton getränkten Baumwolltuch 100-mal poliert. Nach visueller Beurteilung konnten nach diesen 100 Politurzyklen nur minimale Unterschiede zwischen den Brillenglas-Halbfabrikaten der Beispiele und dem Brillenglas-Halbfabrikat des Vergleichsbeispiels erkannt werden.

## Patentansprüche

1. Verfahren zur Erzeugung einer Beschichtung auf einer Oberfläche (14) eines beschichteten oder unbeschichteten Brillenglases (10), mit den Schritten:
- Aufbringen wenigstens einer Maskierung (20) auf wenigstens einen Teilbereich (16) wenigstens einer Oberfläche (14) des beschichteten oder unbeschichteten Brillenglases (10),
- Aufbringen zumindest einer Schicht (22) auf die wenigstens eine Oberfläche (14), und
- Entfernen der wenigstens einen Maskierung (20) und der auf der wenigstens einen Maskierung (20) aufgebrachten zumindest einen Schicht (22) von dem Teilbereich (16) der wenigstens einen Oberfläche (14),
wobei das Aufbringen der Maskierung (20) durch ein Matrixdruckverfahren erfolgt,
**dadurch gekennzeichnet, dass** ein Anteil des mit wenigstens einer Maskierung versehenen Teilbereichs wenigstens einer Oberfläche des beschichteten oder unbeschichteten Brillenglases 20 % oder weniger bezogen auf die gesamte mit wenigstens einer Maskierung versehene wenigstens eine Oberfläche des fertigen, formgerandeten Brillenglases beträgt, wobei der Anteil des mit wenigstens einer Maskierung (20) versehenen Teilbereichs (16) wenigstens einer Oberfläche (14) des beschichteten oder unbeschichteten Brillenglases (10) in einem umlaufenden Randbereich derselben Oberfläche (14) vorliegt, wobei der umlaufende Randbereich in einem konstanten Abstand zur Begrenzung der wenigstens einen Oberfläche (14) liegt, wobei die zumindest eine Schicht (22) ein Teil einer Entspiegelungsschicht oder ein Teil einer Verspiegelungsschicht ist, wobei die zumindest eine Schicht (22) eine erste Schicht ist, wobei zumindest eine zweite Schicht (24) vor dem Schritt des Aufbringens der wenigstens einen Maskierung (20) auf die wenigstens eine Oberfläche (14) und nach dem Schritt des Entfernens der wenigstens einen Maskierung (20) von dem Teilbereich (16) derselben Oberfläche (14) aufgebracht wird, wobei die zumindest eine Schicht (22) ein Reflexionsmaximum in einem nicht-sichtbaren Spektralbereich von weniger als 400 nm oder mehr als 780 nm derart aufweist, dass ein Reflexbild nicht in einem sichtbaren Spektralbereich, sondern in dem nicht-sichtbaren Spektralbereich erzeugt wird, wobei das Reflexbild in Form eines 2D-Codes oder dreidimensionalen Barcodes vorliegt und auslesbare Informationen über das Brillenglas enthält.

2. Verfahren nach Anspruch 1, wobei das Matrixdruckverfahren ein Tintenstrahldruckverfahren ist.

3. Verfahren nach einem der vorstehenden Ansprüche, wobei der Schritt des Entfernens der wenigstens einen Maskierung (20) von dem Teilbereich (16) der wenigstens einen Oberfläche (14) ein Abwischen der Maskierung und/oder ein Eintauchen des beschichteten oder unbeschichteten Brillenglases (10) in ein Lösungsmittel aufweist, wobei das Lösungsmittel Aceton umfasst.

4. Verfahren nach einem der vorstehenden Ansprüche, wobei das beschichtete oder unbeschichtete Brillenglas (10) ein Linsenrohling, ein Brillenglas-Halbfertigprodukt oder ein fertiges Brillenglas ist.

5. Brillenglas (10), mit einer oder mehreren, nur auf einem Teilbereich (16) des Brillenglases (10) aufgebrachten Schicht (22) oder Schichten (22), wobei eine Grenzlinie (30) zwischen dem Teilbereich (16) und einem angrenzenden, insbesondere nicht mit der Schicht (22) oder den Schichten (22) versehenen, Teilbereich (34) durch ein Matrixdruckverfahren definiert ist, wobei die Grenzlinie (30) vorzugsweise eine Pixelstruktur (32) aufweist, **dadurch gekennzeichnet, dass** die eine oder mehreren, nur auf einem Teilbereich (16) des Brillenglases (10) aufgebrachten Schicht (22) oder Schichten (22) wenigstens ein Reflexbild definieren, wobei ein Anteil des mit wenigstens einem Reflexbild versehenen Teilbereichs wenigstens einer Oberfläche des beschichteten oder unbeschichteten Brillenglases 20 % oder weniger bezogen auf die gesamte mit wenigstens einem Reflexbild versehene wenigstens eine Oberfläche des fertigen formgerandeten Brillenglases beträgt, wobei der Anteil des mit wenigstens einem Reflexbild versehenen Teilbereichs (16) wenigstens einer Oberfläche (14) des beschichteten oder unbeschichteten Brillenglases (10) in einem umlaufenden Randbereich derselben Oberfläche (14) vorliegt, wobei der umlaufende Randbereich in einem konstanten Abstand zur Begrenzung der wenigstens einen Oberfläche (14) liegt, wobei die Schicht (22) oder die Schichten (22) ein Teil einer Entspiegelungsschicht oder ein Teil einer Verspiegelungsschicht ist, wobei die Schicht (22) oder die Schichten (22) eine erste Schicht ist, wobei zumindest eine zweite Schicht (24) vor dem Schritt des Aufbringens der wenigstens einen Maskierung (20) auf die wenigstens eine Oberfläche (14) und nach dem Schritt des Entfernens der wenigstens einen Maskierung (20) von dem Teilbereich (16) derselben Oberfläche (14) aufgebracht wird, wobei die Schicht (22) oder die Schichten (22) ein Reflexionsmaximum in einem nicht-sichtbaren Spektralbereich von weniger als 400 nm oder mehr als 780 nm derart aufweist, dass ein Reflexbild nicht in einem sichtbaren Spektralbereich, sondern in dem nicht-sichtbaren Spektralbereich erzeugt wird, wobei das Reflexbild in Form eines 2D-Codes oder dreidimensionalen Barcodes vorliegt und auslesbare Informationen über das Brillenglas enthält.

6. Brillenglas (10) nach Anspruch 5, wobei die wenigstens eine Maskierung (20) des Teilbereichs (16) wenigstens einer Oberfläche des Brillenglases (10) eine strahlungshärtbare Tintenstrahltinte umfasst.

7. Brillenglas (10) nach einem der Ansprüche 5 bis 6, wobei ein Anteil des mit wenigstens einer Maskierung versehenen Teilbereichs (16) an wenigstens einer Oberfläche (14) 0,05 % bis 17 % bezogen auf die gesamte mit wenigstens einer Maskierung versehene wenigstens eine Oberfläche des fertigen, formgerandeten Brillenglases beträgt.

8. Brillenglas (10) nach einem der Ansprüche 5 bis 7, wobei das Brillenglas (10) ein Linsenrohling (12, 12'), ein Brillenglas-Halbfertigprodukt (50) oder ein fertiges Brillenglas ist.

## Claims

1. Method for producing a coating on a surface (14) of a coated or uncoated spectacle lens (10), comprising the following steps:
- Applying at least one masking (20) on at least one partial region (16) of at least one surface (14) of the coated or uncoated spectacle lens (10),
- Applying at least one layer (22) on the at least one surface (14), and
- Removing the at least one masking (20) and the at least one layer (22) applied on the at least one masking (20) from the partial region (16) of the at least one surface (14),
wherein applying the masking (20) is carried out by means of a matrix printing method,
**characterized in that** a proportion of that partial region of at least one surface of the coated or uncoated spectacle lens which is provided with at least one masking is 20% or less relative to the entire at least one surface of the finished, edged spectacle lens that is provided with at least one masking, wherein the proportion of that partial region (16) of at least one surface (14) of the coated or uncoated spectacle lens (10) which is provided with at least one masking (20) is present in a circumferential edge region of the same surface (14), wherein the circumferential edge region is at a constant distance from the boundary of the at least one surface (14), wherein the at least one layer (22) is a part of an antireflection layer or a part of a reflection layer, wherein the at least one layer (22) is a first layer, wherein at least one second layer (24) is applied before the step of applying the at least one masking (20) on the at least one surface (14) and after the step of removing the at least one masking (20) from the partial region (16) of the same surface (14), wherein the at least one layer (22) has a reflection maximum of less than 400 nm or more than 780 nm in a non-visible spectral range such that a reflection image is produced in the non-visible spectral range, rather than in a visible spectral range, wherein the reflection image is present in the form of a 2D code or a three-dimensional barcode and contains readable information about the spectacle lens.

2. Method according to Claim 1, wherein the matrix printing method is an inkjet printing method.

3. Method according to either of the preceding claims, wherein the step of removing the at least one masking (20) from the partial region (16) of the at least one surface (14) comprises wiping away the masking and/or dipping the coated or uncoated spectacle lens (10) into a solvent, wherein the solvent comprises acetone.

4. Method according to any of the preceding claims, wherein the coated or uncoated spectacle lens (10) is a lens blank, a spectacle lens semifinished product or a finished spectacle lens.

5. Spectacle lens (10), comprising one layer (22), or a plurality of layers (22), applied only on a partial region (16) of the spectacle lens (10), wherein a boundary line (30) between the partial region (16) and an adjoining partial region (34), which in particular is not provided with the layer (22) or the layers (22), is defined by a matrix printing method, wherein the boundary line (30) preferably has a pixel structure (32), **characterized in that** said one layer (22), or said plurality of layers (22), applied only on a partial region (16) of the spectacle lens (10), define at least one reflection image, wherein a proportion of that partial region of at least one surface of the coated or uncoated spectacle lens which is provided with at least one reflection image is 20% or less relative to the entire at least one surface of the finished, edged spectacle lens that is provided with at least one reflection image, wherein the proportion of that partial region (16) of at least one surface (14) of the coated or uncoated spectacle lens (10) which is provided with at least one reflection image is present in a circumferential edge region of the same surface (14), wherein the circumferential edge region is at a constant distance from the boundary of the at least one surface (14), wherein the layer (22) or the layers (22) is/are a part of an antireflection layer or a part of a reflection layer, wherein the layer (22) or the layers (22) is/are a first layer, wherein at least one second layer (24) is applied before the step of applying the at least one masking (20) on the at least one surface (14) and after the step of removing the at least one masking (20) from the partial region (16) of the same surface (14), wherein the layer (22) or the layers (22) has/have a reflection maximum of less than 400 nm or more than 780 nm in a non-visible spectral range such that a reflection image is produced in the non-visible spectral range, rather than in a visible spectral range, wherein the reflection image is present in the form of a 2D code or a three-dimensional barcode and contains readable information about the spectacle lens.

6. Spectacle lens (10) according to Claim 5, wherein the at least one masking (20) of the partial region (16) of at least one surface of the spectacle lens (10) comprises a radiation-curable inkjet ink.

7. Spectacle lens (10) according to either of Claims 5 and 6, wherein a proportion of at least one surface (14) that is constituted by the partial region (16) provided with at least one masking is 0.05% to 17% relative to the entire at least one surface of the finished, edged spectacle lens that is provided with at least one masking.

8. Spectacle lens (10) according to any of claims Claims 5 to 7, wherein the spectacle lens (10) is a lens blank (12, 12'), a spectacle lens semifinished product (50) or a finished spectacle lens.

## Revendications

1. Procédé pour générer un revêtement sur une surface (14) d'un verre de lunettes (10) revêtu ou non revêtu, comprenant les étapes suivantes :
- application d'au moins un masquage (20) sur au moins une zone partielle (16) d'au moins une surface (14) du verre de lunettes (10) revêtu ou non revêtu,
- application d'au moins une couche (22) sur l'au moins une surface (14) et
- retrait de l'au moins un masquage (20) et de l'au moins une couche (22) appliquée sur l'au moins un masquage (20) de la zone partielle (16) de l'au moins une surface (14),
l'application du masquage (20) s'effectuant par un procédé d'impression matriciel,
**caractérisé en ce qu'**une part de la zone partielle d'au moins une surface du verre de lunettes revêtu ou non revêtu pourvue de l'au moins un masquage est égale à 20 % ou moins en référence à l'au moins une surface totale pourvue d'au moins un masquage du verre de lunettes terminé bordé à la forme, la part de la zone partielle (16) de l'au moins une surface (14) du verre de lunettes (10) revêtu ou non revêtu pourvue de l'au moins un masquage (20) se trouvant dans une zone de bordure périphérique de la même surface (14), la zone de bordure périphérique se trouvant à un écart constant de la délimitation de l'au moins une surface (14), l'au moins une couche (22) étant une partie d'une couche antireflet ou une partie d'une couche réfléchissante, l'au moins une couche (22) étant une première couche, au moins une deuxième couche (24) étant appliquée avant l'application de l'au moins un masquage (20) sur l'au moins une surface (14) et après l'étape de retrait de l'au moins un masquage (20) de la zone partielle (16) de la même surface (14), l'au moins une couche (22) présentant un maximum de réflexion dans une plage spectrale non visible de moins de 400 nm ou de plus de 780 nm de sorte qu'une image de réflexion est produite non dans une plage spectrale visible, mais dans la plage spectrale non visible, l'image de réflexion se présentant sous la forme d'un code 2D ou d'un code à barres tridimensionnel et contenant des informations lisibles à propos du verre de lunettes.

2. Procédé selon la revendication 1, le procédé d'impression matriciel étant un procédé d'impression par jet d'encre.

3. Procédé selon l'une des revendications précédentes, l'étape de retrait de l'au moins un masquage (20) de la zone partielle (16) de l'au moins une surface (14) comprenant un essuyage du masquage et/ou une immersion du verre de lunettes (10) revêtu ou non revêtu dans un solvant, le solvant comprenant de l'acétone.

4. Procédé selon l'une des revendications précédentes, le verre de lunettes (10) revêtu ou non revêtu étant une ébauche de lentille, un produit semi-fini de verre de lunettes ou un verre de lunettes fini.

5. Verre de lunettes (10), comprenant une ou plusieurs couche (22) ou couches (22) appliquée(s) seulement sur une zone partielle (16) du verre de lunettes (10), une ligne de limitation (30) entre la zone partielle (16) et une zone partielle (34) adjacente, notamment non pourvue de la couche (22) ou des couches (22), étant définie par un procédé d'impression matriciel, la ligne de limitation (30) présentant de préférence une structure de pixels (32), **caractérisé en ce que** l'une ou les plusieurs couche (22) ou couches (22) appliquée(s) seulement sur une zone partielle (16) du verre de lunettes (10) définissent au moins une image de réflexion, une part de la zone partielle d'au moins une surface du verre de lunettes revêtu ou non revêtu pourvue de l'au moins une image de réflexion étant égale à 20 % ou moins en référence à l'au moins une surface totale pourvue d'au moins une image de réflexion du verre de lunettes terminé bordé à la forme, la part de la zone partielle (16) de l'au moins une surface (14) du verre de lunettes (10) revêtu ou non revêtu pourvue de l'au moins une image de réflexion se trouvant dans une zone de bordure périphérique de la même surface (14), la zone de bordure périphérique se trouvant à un écart constant de la délimitation de l'au moins une surface (14), la couche (22) ou les couches (22) étant une partie d'une couche antireflet ou une partie d'une couche réfléchissante, la couche (22) ou les couches (22) étant une première couche, au moins une deuxième couche (24) étant appliquée avant l'application de l'au moins un masquage (20) sur l'au moins une surface (14) et après l'étape de retrait de l'au moins un masquage (20) de la zone partielle (16) de la même surface (14), la couche (22) ou les couches (22) présentant un maximum de réflexion dans une plage spectrale non visible de moins de 400 nm ou de plus de 780 nm de sorte qu'une image de réflexion est produite non dans une plage spectrale visible, mais dans la plage spectrale non visible, l'image de réflexion se présentant sous la forme d'un code 2D ou d'un code à barres tridimensionnel et contenant des informations lisibles à propos du verre de lunettes.

6. Verre de lunettes (10) selon la revendication 5, le masquage (20) de la zone partielle (16) d'au moins une surface du verre de lunette (10) comprenant une encre à jet d'encre durcissable par irradiation.

7. Verre de lunettes (10) selon l'une des revendications 5 à 6, une part de la zone partielle (16) pourvue de l'au moins un masquage étant égale, sur au moins une surface (14), à 0,05 % à 17 % en référence à l'au moins une surface totale pourvue d'au moins un masquage du verre de lunettes terminé bordé à la forme.

8. Verre de lunettes (10) selon l'une quelconque des revendications 5 à 7, le verre de lunettes (10) étant une ébauche de lentille (12, 12'), un produit semi-fini de verre de lunettes (50) ou un verre de lunettes fini.
